# EUROPEAN PATENT APPLICATION

(11) **EP 2 765 502 A1**
(43) Date of publication of application: **13.08.2014**
(21) Application number: 13154624.4
(22) Date of filing: 08.02.2013
(51) Int. Cl.: G06F 3/147, H04N 7/14, H04N 9/75, G06F 19/00

(54) **Method of providing a digitally represented visual instruction from a specialist to a user in need of said visual instruction, and a system therefore**

(71) Applicant: ShowMe Telepresence ApS, 2920 Charlottenlund (DK)
(72) Inventor: Iversen, Steen Svendstorp, 2800 Kgs. Lyngby (DK); Jorgensen, Niels Thomas Rued, 1250 Copenhagen (DK)
(74) Representative: Budde Schou A/S

(57) **Abstract**

The present invention provides a method of providing a digitally represented visual instruction from a specialist operating a visual instruction device to a user in need of the visual instruction in relation to an object of interest and a system therefore. In the method a first video stream comprising images of the object of interest is recorded by a first mobile device associated with the user. The first video stream is sent to a second mobile device associated with the specialist. A second video stream comprising the visual instruction device is recorded by the second mobile device and a foreground/background segmentation operation and a background replacement operation is performed on the second and first video stream to provide a third video stream comprising images of the visual instruction device with the first video stream as background. The third video stream is sent to the first mobile device and is displayed essentially simultaneously on first and second displays on both mobile devices allowing the user, by viewing the first display, to be instructed by the specialist and the specialist, by viewing the second display, to operate the visual instruction device properly in relation to the object of interest. An alternative method using a projection device in the first mobile device and systems corresponding to the methods are also provided.

## Description

The present invention concerns a method of providing a digitally represented visual instruction from a specialist to a user in need of said visual instruction, and a system therefore. More particularly, the present invention concerns a method of providing a digitally represented visual instruction from a specialist, operating a visual instruction device, to a user in need of said visual instruction in relation to an object of interest and a system therefore. In the method a first video stream comprising images of the object of interest is recorded by a first mobile device associated with the user. The first video stream is sent to a second mobile device associated with the specialist. A second video stream comprising the visual instruction device is recorded by the second mobile device and a foreground/background segmentation operation and a background replacement operation is performed on the second and first video stream to provide a third video stream comprising images of the visual instruction device with the first video stream as background. The third video stream is sent to the first mobile device and is displayed essentially simultaneously on first and second displays on both mobile devices allowing the user, by viewing the first display to be instructed by the specialist, and the specialist, by viewing the second display, to operate the visual instruction device properly in relation to the object of interest.

Methods and systems for providing visual instructions, also known as video collaboration tools or remote specialist assistance systems allow a user such as a service employee, for example a technician or a nurse, to obtain remote specialist assistance by pointing a smartphone towards an object of interest and establishing a video and audio session with a remotely located specialist, so the specialist can see transmitted video of the object of interest and deliver voice instructions to the employee or discuss the object of interest.

One example of a video collaboration or remote assistance tool is disclosed in WO2010108186, according to which a user uses a mobile phone to obtain image data of an object of interest and a remote assistant, using a remote computer, transmits instructions to the mobile phone for assisting the user. The instructions may include a star-shaped cursor, visually pointing to specific features on the object of interest, overlaid upon the image data obtained by the mobile phone and displayed on the mobile phone's display.

However, a cursor is originally designed for a man-machine interface and is an unnatural interface between two people. This makes collaboration less intuitive and more restricted than the ideal situation where the specialist would be physically present standing next to the user so they could both point, gesture and illustrate using their hands, like for example when an experienced medical doctor illustrates palpation manoeuvres to a less experienced colleague.

Further, it is desirable that a remote collaboration session can be established via a mobile device such as a smartphone also at the end of the specialist, so he can be accessed anywhere using familiar technology with no training required and without having to move to a desktop computer or other equipment. Specialists are usually a limited resource and the overhead time involved for them to provide assistance should be minimized.

Other methods and systems for providing remote assistance are disclosed in inter alia US6611242B1 and WO2009128781A1, in which a worker wearing a head mounted camera is instructed by a marker positioned by an instructor, the instructor viewing the image from the camera and the marker being overlaid on the image from the camera and displayed on a head mounted display.

Thus, also the user, and not only the specialist, may be forced in the prior art solutions to use specialized devices.

Hence, the unnatural and restricting interface, the overhead time involved and the lack of mobility for the specialists and in some cases the need for specialised devices for the users in the methods and systems of the prior art, are obstacles for wider adoption of remote specialist assistance systems.

It is therefore an object of the present invention to provide a method of providing a digitally represented visual instruction from a specialist to a user in need of said visual instruction, and a system therefore which supports a natural way for the user and the specialist to gesture, discuss, demonstrate maneuvers and point to features of an object of interest.

It is a further object of the present invention to provide a method of providing a digitally represented visual instruction from a specialist to a user in need of said visual instruction and a system therefore which is intuitive to use for the specialist.

It is yet a further object of the present invention to provide a method of providing a digitally represented visual instruction from a specialist to a user in need of said visual instruction, and a system therefore which works with commercially available mobile devices smartphones in both ends, i.e. associated with the specialist and the user, of the session without need for any additional equipment.

At least one of the above objects and/or other objects which will be evident from the below description, are according to corresponding first and third aspects of the present invention achieved by a method of providing a digitally represented visual instruction from a specialist, operating a visual instruction device to a user in need of the visual instruction in relation to an object of interest, the method comprising the steps of:
i. providing a first mobile device associated with the user, the first mobile device comprising:
   a. a first camera,
ii. providing a second mobile device associated with the specialist, the second mobile device comprising:
   b. a second camera,
   c. a second display,
iii. positioning the first mobile device such that the first camera is directed towards a first scene comprising the object of interest,
iv. capturing a first video stream of the first scene by the first camera,
v. positioning the second mobile device such that the second camera is directed towards a second scene comprising the visual instruction device and such that said second display is viewable by the specialist,
vi. capturing a second video stream of said second scene by the second camera, said second video stream comprising a digital representation of the visual instruction device, the digital representation of the visual instruction device defining the digitally represented visual instruction.
vii. generating a third video stream comprising the digitally represented visual instruction in the foreground and the first video stream in the background,
viii. displaying the third video stream on the second display such that the specialist may view the third video stream, and in response to the third video stream, and in order to generate the digitally represented visual instruction, operate the visual instruction device in relation to the object of interest.
ix. sending the digitally represented visual instruction to the first mobile device and receiving the digitally represented visual instruction by the first mobile device, and,
x. displaying the digitally represented visual instruction to the user,
   and,
   a system for providing a digitally represented visual instruction, from a specialist operating a visual instruction device to a user in need of the visual instruction in relation to an object of interest, the system comprising:
   a first mobile device comprising a first camera,
   a second mobile device comprising a second camera and a second display,
   the first camera being configured to capture a first video stream of a first scene comprising the object of interest,
   the second camera and the second display being provided on the second mobile device such that second camera can be directed towards a second scene comprising the visual instruction device while the second display is viewable by the specialist,
   the second camera being further configured to capture a second video stream of the second scene, the second video stream comprising a digital representation of the visual instruction device, the digital representation of the visual instruction device defining the digitally represented visual instruction,
   the second mobile being configured to generate a third video stream comprising the digitally represented visual instruction in the foreground and the first video stream in the background, and
   the second mobile device being configured to display the third video stream on the second display so that the specialist may view the third video stream, and in response to the third video stream, and in order to generate the digitally represented visual instruction, operate the visual instruction device in relation to the object of interest.
   the second mobile device further being configured to provide the digitally represented visual instruction to the first mobile device, and
   the first mobile device being configured to display the digitally represented visual instruction to the user,
respectively.

As the specialist sees the third video stream, which comprises the first video stream, the specialist receives the same visual information as the user sees, hence it provides a natural way for the user and the specialist to gesture, discuss, demonstrate manouvers and point to features of an object of interest.

As the second mobile device is placed such that the second camera can capture the second scene and such that the second display is viewable by the specialist, and as the third video stream is displayed on the second display, the operation of the visual instruction device becomes intuitive for the specialist.

By using a camera and a display which nearly all commercially available mobile devices such as smartphones and tablets are equipped with, there is no need for either the user or the specialist to use any special equipment and hence the specialist is free to offer assistance from nearly every location and the user is able to obtain assistance from nearly every location.

The steps may be performed consecutively from step i to x. Steps i-iii and v should be performed prior to steps iv and vi.

The digitally represented visual instruction is a digital representation, typically an image, of a visual instruction, typically a position, shape, colour or movement, generated by the position, shape, colour or movement of the visual instruction device. In the context of the present invention, the term associated with is to be understood as also comprising the situation, where the item referred to is owned, borrowed, or otherwise in control of, or available to the entity referred to.

The first and second mobile devices are preferably mobile smartphones, such as programmable mobile phones for example an iPhone® or an Android™ mobile phone, a tablet PC such as an iPad® or an Android™ tablet PC, but may also be non-smart mobile phones provided they are equipped with the requisite hardware for performing the required steps of the method.

Further examples of first and mobile devices include glasses or goggles.

The second display should be capable of rendering the third video stream.

The first scene may comprise more than the object of interest, or alternatively the first scene may contain only the object of interest.

The second scene preferably comprises more than the visual instruction device, for example a background surrounding the visual instruction device such that the visual instruction device may be moved in all directions while remaining within the second scene.

In the context of the present invention, the meaning of the digitally represented visual instruction being in the foreground is to be understood as an image of the visual instruction device, i.e. the digitally represented visual instruction, being placed in the foreground, i.e. obscuring the background behind it.

The specialist may operate the visual instruction device for example by moving it, rotating it and changing its shape.

Preferably, the first, second and third video streams have the same resolution, i.e. width and height in pixels. However, where the resolution of the first and second video stream differ one of them may be upsampled or downsampled prior to the generation of the third video stream. The third video steam may also be up or downsampled in relation to the first and second video streams.

In the preferred embodiment of the method and system according to the first aspect of the present invention, the method further comprises the steps of:
xi. sending the first video stream to the second mobile device and receiving the first video stream by the second mobile device, and
xii. generating the third video stream by the second mobile device.

In the preferred embodiment of the system according to the third aspect of the present invention, the first mobile device is configured to send the first video stream to the second mobile device, and the second mobile device is configured to receive the first video stream and to generate the third video stream.

This is advantageous in that it provides a system which does not need any central processing infrastructure.

The third video stream may be generated by a second image processing circuit comprised by the second mobile device.

The steps are preferably executed consecutively from step xi to xii.

In an alternative embodiment of the method according to the first aspect of the present invention, the method further comprises the steps of
xiii. providing a server capable of generating the third video stream,
xiv. sending the first video stream and the digitally represented visual instruction to the server and receiving the first video stream and the digitally represented visual instruction by the server,
xv. generating the third video stream by the server, and
xvi. sending the third video stream to the second mobile device and receiving the third video steam by the second mobile device.

In an alternative embodiment of the system according to the third aspect of the present invention, the system further comprises a server capable of generating the third video stream and the first mobile device is configured to send the first video stream to the server and the second mobile device is configured to send the digitally represented visual instruction to the server and to receive the third video stream from the server, and the server is configured to receive the first video stream and the digitally represented visual instruction and to generate the third video stream and send it to the second mobile device.

This is advantageous as it decreases the computation power needed in the second mobile device, and thereby allows the method to be performed with a wider variety of second mobile devices.

The steps may be performed consecutively from step xiii to xvi. Step xiii should be performed prior to the steps xiv to xvi.

The server may be a single computer or processor or several computers or processors.

The first video stream and the digitally represented visual instruction may be sent to the server, and the third video stream sent from the server, via telephone lines, a cellular network, or via internet networks and protocols.

The first video stream may be captured to a buffer memory provided in the first mobile device, or alternatively each frame of the first video stream may be sequentially sent to the second mobile device in the preferred embodiment, or the server in the above described alternative embodiment.

The second video stream may be captured to a buffer memory provided in the second mobile device, or alternatively each frame of the second video stream may be sequentially used for generating the third video stream in the preferred embodiment, or may be sent to the server in the above described alternative embodiment.

In the preferred embodiment of the method according to the first aspect of the present invention, the first mobile device further comprises:
d. a first display,
and the positioning of the first mobile device is further such that the first display is viewable by the user, and the digitally represented visual instruction is displayed on the first display.

In the preferred embodiment of the system according to the third aspect of the present invention, the first mobile device comprises a first display configured to display the digitally represented visual instruction.

This is advantageous as a display is a simple and compact means of displaying the digitally represented visual instruction and it allows the method to be used with a wide variety of first mobile devices since displays are common on mobile devices.

In the preferred embodiment of the method and system according to the corresponding first and third aspects of the present invention, the first camera and the first display are provided on opposite sides of the first mobile device.

This is advantageous, as it allows the user to place the first mobile device between the user and the object of interest, thus it is easy to position the first mobile device such that the camera is directed towards the object of interest.

In the preferred embodiment of the method according to the first aspect of the present invention, the method further comprises the step of:
xvii. positioning the first mobile device such that the first display is provided on a visual axis between the object of interest and an eye of the user, or alternatively positioning the first mobile device such that the first camera and the first display are provided on a visual axis between the object of interest and the eyes of the user.

This is advantageous as it makes it easier to see the position of the visual instruction device in relation to the object of interest.

In the context of the present invention, the term visual axis is to be understood as comprising a straight line.

In the preferred embodiment of the method according to the first aspect of the present invention, the method further comprises the steps of:
xviii. sending the third video stream to the first mobile device and receiving the third video stream by the first mobile device, and,
xix. displaying the third video stream on the first display.

In the preferred embodiment of the system according to the third aspect of the present invention, the second mobile device is configured to send the third video stream to the first mobile device and the first mobile device is configured to receive the third video stream and display it on the first display.

This is advantageous as it decreases the computational power required of the first mobile device in that the first mobile device need only be capable of receiving and displaying the third video stream. Further, it ensures that both the specialist and the user sees the same visual information, thus it makes the cooperation between the specialist and the user more effective.

Where the third video stream is generated by a server, a further advantage arises in that it lessens the risk of a delay between the display of a certain frame of the third video stream on the first mobile device and the second mobile device, since both mobile devices need to send their respective video streams to the server and receive the third video stream from the server, thus the amount of data transmitted to and from the server and the requirements for computational power are similar for both mobile devices.

The steps may be performed consecutively from step xviii to xix. Step xviii should be performed prior to step xix.

In an alternative embodiment of the method according to the first aspect of the present invention, the method further comprises the steps of:
xx. generating a fourth video stream comprising the digitally represented visual instruction in the foreground and the first video stream in the background by the first mobile device, and,
xxi. displaying the fourth video stream on the first display.

In an alternative embodiment of the system according to the third aspect of the present invention, the first mobile device is configured to generate a fourth video stream comprising the digitally represented visual instruction in the foreground and the first video stream in the background and to display the fourth video stream on the first display.

This is advantageous in that it requires less bandwidth between the first mobile device and the second mobile device, since only the digitally represented visual instruction and not the full third video stream need to be sent to the first mobile device.

The fourth video stream is generated in the same way as and is preferably identical to the third video stream.

The steps may be performed consecutively from step xx to xxi. Step xx should be performed prior to step xxi.

In alternative embodiments of the method and system according to the corresponding first and third aspects of the present invention, the first display is optically transparent and the digitally represented visual instruction is displayed on a part of the first display, such that the user may see the digitally represented visual instruction on the part of the first display and the object of interest optically through the first display, simultaneously.

This is advantageous as it allows the user to see the object of interest in the background in great detail and clarity through the display, while seeing the visual instruction on the first display, potentially eliminating the need for the user of taking his eyes off the first display to look directly at the object of interest.

The first display may be a transparent LCD display.

The object of interest is seen through the remainder of the first display, i.e. the whole of the first display minus the part on which the digitally represented visual instruction is displayed, and minus any further part on which other information or controls to of use to the user are displayed, for example a current time, date, volume control, brightness control.

In a first method of displaying the digitally represented visual instruction on a part of the first display, the second video stream or the third video stream is first sent from the second mobile device to the first mobile device. Then a fourth video stream or a modified third video stream, comprising the digitally represented visual instruction in the foreground and with a background having pixel values which results in the background being transparent when displayed on the first display, is generated by the first mobile device by a foreground/background segmentation and background replacement on the second or third video stream as described below with reference to method steps xxv and xxvi and the discussion thereof. Finally, the fourth video stream or the modified third video stream is displayed on the first display.

This is a robust method which tolerates differences in resolution and quality between the first camera and the second camera.

In a second method of displaying the digitally represented visual instruction on a part of the first display, the third video stream is sent to the first mobile device by the server or by the second mobile device. The first mobile device then generates a fourth video stream by subtracting the first video stream from the third video stream, such that all pixels having the same pixel values in both the first and third video stream are set to pixel values which yield transparent pixels when displayed on the first display. The subtraction is made for each pair of temporally corresponding video images in the third and first video streams.

This is a method which is fast since there is no need for foreground/background segmentation.

In an alternative embodiment of the method according to the first aspect of the present invention, the first mobile device further comprises:
e. a first projection device,
   and the method further comprises the steps of:
   xxii. projecting the digitally represented visual instruction onto the object of interest.

In an alternative embodiment of the system according to the third aspect of the present invention, the first mobile device further comprises a projection device configured to project the digitally represented visual instruction onto the object of interest.

This is advantageous as it provides a way of displaying the digitally represented visual instruction to the user, which does not require the user to watch the first mobile device.

In the preferred embodiment of the method and system according to the corresponding first and third aspects of the present invention, the visual instruction device comprises the hand of the specialist and/or an object held by the hand.

This is advantageous as it allows the specialist to convey more information in the digitally represented visual instruction, for example the shape or orientation of the hand, gestures of the hand, the type of object, the orientation of the object, the handling of the object, etc., than that which can be conveyed by for example a cursor. The object may be a tool such as a screwdriver, a probe, a scalpel, or alternatively the object may be an electronic component, a spare part, etc.

In the preferred embodiment of the method and system according to the corresponding first and third aspects of the present invention, the second camera and the second display are provided on opposite sides of the second mobile device.

This is advantageous as it allows the specialist to place the second mobile device between the visual instruction device and himself, thus it is easy and intuitive to position the visual instruction device in relation to the object of interest shown in the third video stream displayed on the second display.

In the preferred embodiment of the method according to the first aspect of the present invention, the method further comprises the step of:
xxiii. positioning the second mobile device such that the second display is provided on a visual axis between the visual instruction device and an eye of the specialist, or alternatively positioning the second mobile device such that the second camera and the second display are provided on a visual axis between the visual instruction device and the eyes of the specialist.

This is advantageous as it makes it easier and more intuitive to see and control the position of the visual instruction device in relation to the object of interest shown in the third video stream displayed on the second display.

In one embodiment of the method and system according to the corresponding first and third aspects of the present invention, the first mobile device is a first headgear device, preferably a helmet or goggles, the first headgear device is affixable to the head of the user, and it is adapted to position the first display such that it is viewable by the user when the first headgear device is affixed to the head of the user.

This is advantageous as it allows the user to use both his arms and hand to interact with the object of interest. Further, it relieves the user of having to hold the first mobile device.

The first headgear device may be a helmet, for example a hard hat, goggles, glasses, etc. The first display may be held by an arm so that the first display is viewable by the user. The first camera may be attached to the arm or attached to the helmet. A computing module, a transceiver module, and a power supply may be integrated with the helmet, the first display, the arm or the first camera, or may be distributed between these four elements.

On goggles or glasses the first display may substitute one of the lenses and be positioned such that it is mainly viewable by a first eye of the user. A further first display comprised by the first mobile device and operably connected to a further first camera in the same way as the first display is operably connected to the first camera, may substitute the other one of the lenses and be positioned such that it is mainly viewable by a second eye of the user for stereoscopic vision in combination with he first display and the first camera.

Alternatively, the further first display may mirror the first display.

When the first headgear is goggles or glasses, the first display and the further first display where present, are preferably transparent.

The first display and where present the further first display, may cover fully or partially the field of view of the user.

A computing module, a transceiver module, and a power supply may be integrated with the goggles or glasses, the first display, or the first camera, or may be distributed between these three elements.

In one embodiment of the method and system according to the corresponding first and third aspects of the present invention, the second mobile device is a second headgear device, preferably a helmet or goggles, the second headgear device is affixable to the head of the specialist and it is adapted to position the second display such that it is viewable by the specialist when the second headgear device is affixed to the head of the specialist.

This is advantageous as it allows the specialist to use both his arms and hands to control the visual instruction device. Further, it relieves the specialist of having to hold the first mobile device.

The second headgear device may be a helmet, for example a hard hat, goggles, glasses, etc. The second display may be held by an arm so that the second display is viewable by the specialist. The second camera may be attached to the arm or attached to the helmet. A computing module, a transceiver module and a power supply may be integrated with the helmet, the second display, the arm or the second camera, or may be distributed between these four elements.

On goggles or glasses, the second display may substitute one of the lenses and be positioned such that it is mainly viewable by a first eye of the specialist. A further second display comprised by the second mobile device and operably connected to a further second camera in the same way as the second display is operably connected to the second camera, may substitute the other one of the lenses and be positioned such that it is mainly viewable by a second eye of the specialist, for stereoscopic vision in combination with he second display and the second camera.

Alternatively, the further second display may mirror the second display.

The second display and where present the further second display, may cover fully or partially the field of view of the specialist.

A computing module, a transceiver module, and a power supply may be integrated with the goggles or glasses, the second display, or the second camera, or may be distributed between these three elements.

In an alternative embodiment of the method according to the first aspect of the present invention, the method further comprises the steps of:
xxiv. providing a first headgear holding device, preferable a helmet, headband or goggles, affixable to the head of the user, comprising a first holding device, for holding the first mobile device, and a first positioning device interposed between the first headgear holding device and the first holding device, the first positioning device being adapted to position the first mobile device such that the first display is viewable by the user when the first headgear holding device is affixed to the head of the user, and
xxv. affixing the first headgear holding device to the head of the user and attaching the first mobile device to the first holding device, or alternatively or additionally the steps of:
   xxvi. providing a second headgear holding device, preferable a helmet, headband or goggles, affixable to the head of the specialist, comprising a second holding device for holding the second mobile device, and a second positioning device interposed between the second headgear holding device and the second holding device, the second positioning device being adapted to position the second mobile device such that the second display is viewable by the specialist when the second headgear holding device is affixed to the head of the specialist, and
   xxvii. affixing the second headgear holding device to the head of the specialist and attaching the second mobile device to the second holding device.

In an alternative embodiment of the system according to the third aspect of the present invention, the system further comprises a first headgear holding device, preferably a helmet, headband or goggles, affixable to the head of the user, the first headgear holding device comprising a first holding device for holding the first mobile device, and a first positioning device interposed between the first headgear holding device and the first holding device, the first positioning device being adapted to position the first mobile device such that the first display is viewable by the user when the first headgear holding device is affixed to the head of the user, or alternatively or additionally the system further comprises a second headgear holding device, preferably a helmet, headband or goggles, affixable to the head of the specialist, the second headgear holding device comprising a second holding device, for holding the second mobile device, and a second positioning device interposed between the second headgear holding device and the second holding device, the second positioning device being adapted to position the second mobile device such that the second display is viewable by the specialist when the second headgear holding device is affixed to the head of the specialist.

This is advantageous as it allows the user and/or the specialist to use both arms and hands for interacting with the object of interest and controlling the visual instruction device, respectively.

The first and/or second headgear holding device may be a helmet, for example a hard hat, goggles, glasses, etc. The first and//or second positioning device may be an arm, which arm may be adjustable in length and/or direction. The first and/or second holding device may be a clip, a magnet, a rubber band etc. If the first and/or second positioning device positions the first or second display close to an eye of the user or specialist a concave lens may be provided, for example supported by the first and/or second positioning device or supported by the first and/or second holding device, help the eye to properly focus on the first and/or second display.

The steps may be performed consecutively from step xxiv to xxvii. Steps xxiv and xxvi should be performed prior to steps xxv and xxvii.

In the preferred embodiment of the method according to the first aspect of the present invention, the generation of the third video stream is performed essentially simultaneously with the capturing of the first video stream and the capturing of the second video stream.

In the preferred embodiment of the system according to the third aspect of the present invention, the first and second mobile devices are configured such that the second mobile device generates the third video essentially simultaneously with the capturing of the first video stream and the capturing of the second video stream.

This is advantageous as it preserves the information content of the digitally represented visual instruction.

If the specialist is able to properly control the visual instruction device in relation to the object of interest, then the information content of the digitally represented visual instruction is high. If the specialist is not able to properly control the visual instruction device in relation to the object of interest, then the information content of the digitally represented visual instruction is low or non-existent.

Preferably, the display of the digitally represented visual instruction is also performed essentially simultaneously with the displaying of the third video stream on the second display.

The term "essentially simultaneously" as used in this application including the points is to be understood as also encompassing the situation where there is a delay or lag between the display of a certain frame of the third video stream, on the second mobile device and the display of that certain frame, or the corresponding digitally represented visual instruction to the user, or between the capturing of a certain frame in the first and/or second video stream and the generation of a frame in the third video stream comprising that certain frame, provided the delay is less than or equal to a certain time. If the delay is too large, the specialist will not be able to control the visual instruction device properly as any deliberate or accidental change in position of the first or second mobile device will lead to a change in the position of the visual instruction device in relation to the object of interest, thus destroying or at least decreasing the information content of the digitally represented visual instruction. Further, a large delay will make it hard for the specialist to control the visual instruction device, as he will have to wait after moving the visual instruction device to see its new position in relation to the object of interest.

This delay may for example be caused by the time needed to generate the third video stream and/or the time needed to capture and send the first video stream to the second mobile device. Preferably, this delay should not be more than 20 ms to maintain a good synchronization between the specialist and the user and/or to maintain a high information content of the digitally represented visual instruction. Hence, the delay should not be more than 20 ms.

In embodiments of the method according to the first aspect of the present invention, the second mobile device may further comprise:
f. a light source for illuminating the visual instruction device,
   in which case the method further comprises the step of:
   xxviii. illuminating the visual instruction device by the light source.

In embodiments of the system according to the third aspect of the present invention, the second mobile device may further comprise a light source for illuminating the visual instruction device.

This is advantageous as it provides for simple methods of generating the third video stream.

The light source may for example be a LED or Xenon flash. The light source may be used for illuminating the visual instruction device for performing a luma keying or chroma keying of the second video stream with the first video stream

In the preferred embodiment of the method according to the first aspect of the present invention, the method further comprises the steps of:
xxix. performing a foreground/background segmentation on the second video stream by segmenting each video image of the second video stream into a foreground video image and a background video image such that the digitally represented visual instruction is comprised by the foreground video image, and,
xxx. performing a background replacement on the second video stream with the first video stream by combining each foreground video image with a temporally corresponding video image from the first video stream.

In the preferred embodiment of the system according to the third aspect of the present invention, the second mobile device is further configured to perform a foreground/background segmentation on the second video stream by segmenting each video image of the second video stream into a foreground video image and a background video image, such that the digitally represented visual instruction is comprised by the foreground video image, and to perform a background replacement on the second video stream with the first video stream by combining each foreground video image with a temporally corresponding video image from the first video stream. This is advantageous as it provides a simple way of generating the third video stream. The steps may be performed consecutively from step xxix to xxx. Step xxix should be performed prior to step xxx.

The steps xxv and xxvi may in the alternative embodiment of the method according to the first aspect of the present invention be performed by the server and the server may in the alternative embodiment of the system, according to the third aspect of the present invention, be configured to perform the steps xxv and xxvi.

In embodiments of the method according to the first aspect of the present invention, the second mobile device may further comprise:
g. a light source for illuminating the visual instruction device,
   and step vii comprises the substeps of:
h. recording a first frame of the second video stream by the second camera while the light source does not illuminate the visual instruction device,
j. recording a second frame of the second video stream by the second camera while the light source illuminates the visual instruction device,
k. generating a differential frame by subtracting the second frame transformed into grayscale from the first frame transformed into grayscale,
m. optionally generating a filtered differential frame by noise filtering the differential frame, wherein the noise filtering may be median filtering,
n. generating a foreground mask by threshold filtering the differential frame or the filtered differential frame, and
o. generating a frame of the third video stream by adding the product of the first frame and the foreground mask to the product of a frame of the first video stream and the inverse of the foreground mask.

In embodiments of the system according to the third aspect of the present invention, the second mobile device may further comprise a light source for illuminating the visual instruction device and the second mobile is further configured to record a first frame of the second video stream using the second camera while the light source does not illuminate the visual instruction device, record a second frame of the second video stream using the second camera stream while the light source illuminates the visual instruction device, and the second mobile device or the server is further configured to generate a differential frame by subtracting the second frame transformed into grayscale from the first frame transformed into grayscale, optionally generate a filtered differential frame by noise filtering the differential frame, wherein the noise filtering may be median filtering, generate a foreground mask by threshold filtering the differential frame or the filtered differential frame, and to generate a frame of the third video stream by adding the product of the first frame and said foreground mask to the product of a frame of the first video stream and the inverse of the foreground mask. The substeps k, m, n, o are preferably performed consecutively. substeps h and j should be performed prior to substeps k, m, n and o.

This method or steps of foreground/background segmentation and background replacement are advantageous in that they require very little computional power. It is therefore especially suited for when the third video stream is generated by the second mobile device. The transformations and operations are simple matrix operations and do not involve any tracking of feature recognition.

The light source may be a LED or Xenon flash. The light source should be capable of illuminating the visual instruction device. Due to the difference in distance between the visual instruction device and the second camera and the distance between any background in the second scene and the camera, the visual instruction device will be more brightly illuminated than the background of the second scene.

In substep k, intermediate first and second frames may first be generated by transforming the first and second frames into grayscale, whereafter the second intermediate frame is subtracted from the first intermediate frame. Alternatively, the differential frame may be computed directly using the values for the different colour channels of the frames and appropriate coefficients for converting to gray scale. One possible example where the first and second frames are RGB coded is Gray = 0.299Red + 0.587Green + 0.114Blue.

The substeps h and j should be performed before the substeps k, m, n, and o. As two frames of the second video stream are needed for producing one frame of the third video stream, the second camera may record the second video stream at double the frame rate of the first video stream used for generating the third video stream. This gives a high quality. Alternatively, the third video stream could be generated in such a way that every second frame of it is generated according to the above method while the frames in between are simply copies of frames from the first video stream. This obviates the need for having different frame rates for the first and second video streams, however it may lead to flickering.

The substeps k, m, n and o may be performed by the second mobile device, the server, or distributed between the second mobile device and the server. It is further contemplated that the substeps k, m, n and o may also be performed by the first mobile device provided that a frame of the fourth video stream is then generated in substep p.

If the environment, in which the second mobile device is situated, is dark, the substeps h and k may be dispensed with. In this case a modified substep m uses the second frame, recorded in substep j, in place of the differential frame for generating a filtered second frame. Further, a modified substep n uses the second frame or the filtered second frame in place of the differential frame or the filtered differential frame for generating the foreground mask. Finally, a modified substep o uses the second frame in place of the first frame for generating the frame of the third video stream. Correspondingly, the second mobile device or the server is modified to optionally generate a filtered differential frame by noise filtering the second frame, wherein the noise filtering may be median filtering, generate a foreground mask by threshold filtering the second frame or the filtered second frame, and to generate a frame of the third video stream by adding the product of the second frame and said foreground mask to the product of a frame of the first video stream and the inverse of the foreground mask.

This is advantageous as it reduces the need for rapidly turning the light source on and off, further it saves on computational resources as there is no need for generating the differential frame.

The reason for being able to dispense with substeps h and k is that the difference in distance between the visual instruction device and the background, for example the walls of a room in which the specialist stands holding the second mobile, causes the visual instruction device to be much more brightly illuminated by light source than the background. Thus, where the background is dark, for example in an unlit room, the second frame of the second video stream, as recorded in substep j, may be used, directly or after noise filtering, in the threshold filtering.

At least one of the above objects and/or other objects, which will be evident from the below description, are according to corresponding second and fourth aspects of the present invention achieved by a method of providing a digitally represented visual instruction from a specialist, operating a visual instruction device to a user in need of said visual instruction in relation to an object of interest, the method comprising the steps of:
xxxi. providing a first mobile device associated with the user, the first mobile device comprising:
   p. a first camera,
xxxii. providing a projection device associated with said user and capable of projecting the digitally represented visual instruction,
xxxiii. providing a second mobile device associated with the specialist, the second mobile device comprising:
   q. a second camera,
   r. a second display,
xxxiv. positioning the first mobile device such that the first camera is directed towards a first scene comprising the object of interest,
xxxv. positioning the projection device such that the projection device is capable of projecting the digitally represented visual instruction onto the first scene,
xxxvi. positioning the second mobile device such that the second camera is directed towards a second scene comprising the visual instruction device and such that the second display is viewable by the specialist,
xxxvii. capturing a first video stream of the first scene by the first camera,
xxxviii. capturing a second video stream of the second scene by the second camera, the second video stream comprising a digital representation of the visual instruction device, the digital representation of the visual instruction device defining the digitally represented visual instruction,
xxxix. providing a third video stream using the second video stream, the third video stream comprising the digitally represented visual instruction in the foreground on a dark or black background,
xl. sending the third video stream to the projection device and receiving the third video stream by the projecting device,
xli. projecting the third video stream onto the first scene, thereby providing the digitally represented visual instruction to the user and thereby introducing the digitally represented visual instruction into the first scene,
xlii. sending the first video stream to the second mobile device and receiving the first video stream by the second mobile device,
xliii. displaying the first video stream on the second screen such that the specialist may view the first video stream, and in response to the first video stream, and in order to generate the digitally represented visual instruction, operate the visual instruction device in relation to the object of interest,
and,
a system for providing a digitally represented visual instruction from a specialist operating a visual instruction device to a user in need of the visual instruction in relation to an object of interest, the system comprising:
a first mobile device comprising a first camera,
a projection device,
a second mobile device comprising a second camera and a second display,
the first camera being configured to capture a first video stream of a first scene comprising the object of interest,
the second camera and the second display being provided on the second mobile device such that the second camera can be directed towards a second scene comprising the visual instruction device while the second display is viewable by the specialist,
the second camera being further configured to capture a second video stream of the second scene, the second video stream comprising a digital representation of the visual instruction device, the digital representation of the visual instruction device defining the digitally represented visual instruction,
the second mobile being configured to provide a third video stream, using the second video stream, the third video stream comprising the digitally represented visual instruction in the foreground on a dark or black background,
the second mobile device being configured to send the third video stream to the projector,
the projector being configured to receive the third video stream and to project the third video stream onto the object of interest in order to introduce the digitally represented visual instruction into the first scene,
respectively.

As the specialist sees the first video stream, which comprises the images of the object of interest with the digitally represented visual instruction projected onto it, the specialist receives the same visual information as the user, hence it provides a natural way for the user and the specialist to gesture, discuss, demonstrate manouvers and point to features in an object of interest.

As the second mobile device is placed such that the second camera can capture the second scene and such that the second screen is viewable by the specialist and as the first video stream is displayed on the second screen, the operation of the visual instruction device becomes intuitive for the specialist.

By using a camera and a display, with which nearly all commercially available mobile devices such as smartphones and tablets are equipped with, there is no need for the specialist to use any special equipment, and hence the specialist is free to offer assistance from nearly every remote location.

As the digitally represented visual instruction is projected onto the object of interest, the user is free from having to view a display on the first mobile device, thus the user may for example study a manual associated with the object of interest while receiving the digitally represented visual instruction.

The steps may be performed consecutively from step xxxi to xliii. Steps xxxi-xxxvi should be performed prior to the steps xxxvii and xxxviii.

What has been described above with regard to the digitally represented visual instruction, the first and second mobile devices, the first and second scene, the operation of the visual instruction device and the resolution of the first, second and third video stream in relation to the method and system according to the corresponding first and third aspects of the present invention, applies also to the method and system according to the corresponding second and fourth aspects of the present invention.

Further, the second display should be capable of rendering the first video stream.

In the preferred embodiment of the method and system according to the corresponding second and fourth aspects of the present invention the projection device is comprised by this first mobile device.

This is advantageous in that it removes the need for a separate projector.

In the preferred embodiment of the method and system according to the second aspect of the present invention, the method further comprises the steps of:
xliv. analyzing the second video stream for determining whether:
   s. the second video stream comprises the digitally represented visual instruction on a uniform dark or black background, in which case the providing of the third video stream comprises copying the second video stream, or
   t. the second video stream does not comprise the digitally represented visual instruction on a uniform dark or black background, in which case the providing of the third video stream comprises the substeps of:
      i. performing a foreground/background segmentation on the second video stream by segmenting each video image of the second video stream into a foreground video image and a background video image such that the digitally represented visual instruction is comprised by the foreground video image, and,
      ii. performing a background replacement on the second video stream by combining each foreground video image with a dark or black background image.

In the preferred embodiment of the system according to the fourth aspect of the present invention, the second mobile device is further configured to analyze the second video stream for determining whether
the second video stream comprises the digitally represented visual instruction on a uniform dark or black background, in which case the third video stream is a copy of the second video stream, or
the second video stream does not comprise the digitally represented visual instruction on a uniform dark or black background, in which case the second mobile device is configured to generate the third video stream by performing a foreground/background segmentation on the second video stream by segmenting each video image of the second video stream into a foreground video image and a background video image such that the digitally represented visual instruction is comprised by the foreground video image, and, performing a background replacement on the second video stream by combining each foreground video image with a dark or black background image.

This is advantageous as it conserves computational resources if the second mobile device is used in a dark environment.

The dark or black background is preferably uniform.

The invention and its many advantages will be described in more detail below with reference to the accompanying schematic drawings, which for the purpose of illustration show some non-limiting embodiments, and in which:

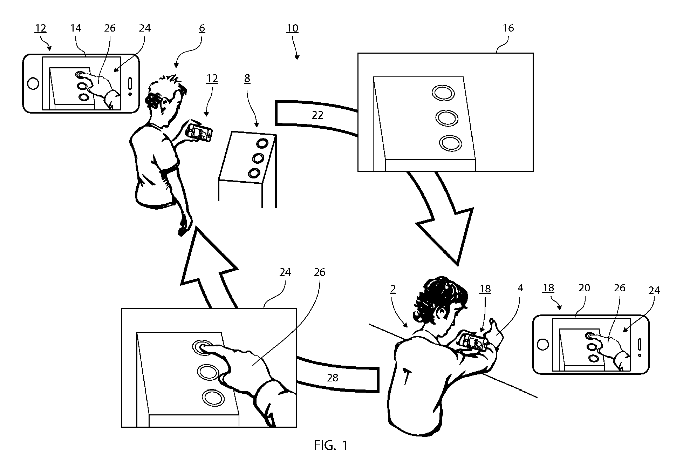

Fig. 1 shows a first embodiment of a method of providing a digitally represented visual instruction, from a specialist operating a visual instruction device to a user in need of said visual instruction in relation to an object of interest, according to the first aspect of the present invention being performed in first embodiment of a system for providing a digitally represented visual instruction according to the third aspect of the present invention,

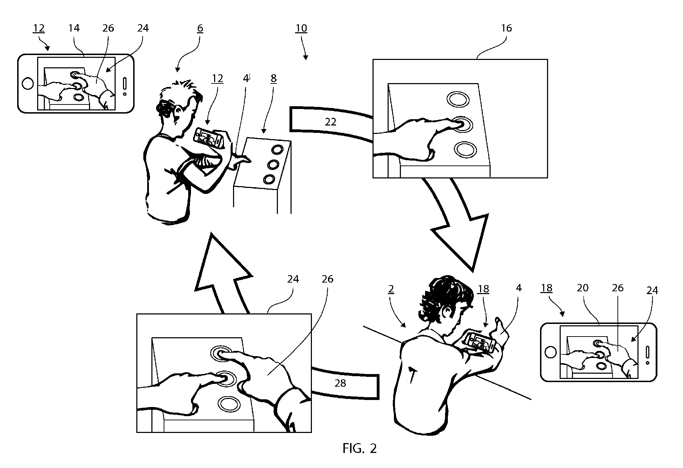

Fig. 2 shows a second embodiment of a method of providing a digitally represented visual instruction, from a specialist operating a visual instruction device to a user in need of said visual instruction in relation to an object of interest, according to the first aspect of the present invention being performed in the first embodiment of a system for providing a digitally represented visual instruction according to the third aspect of the present invention,

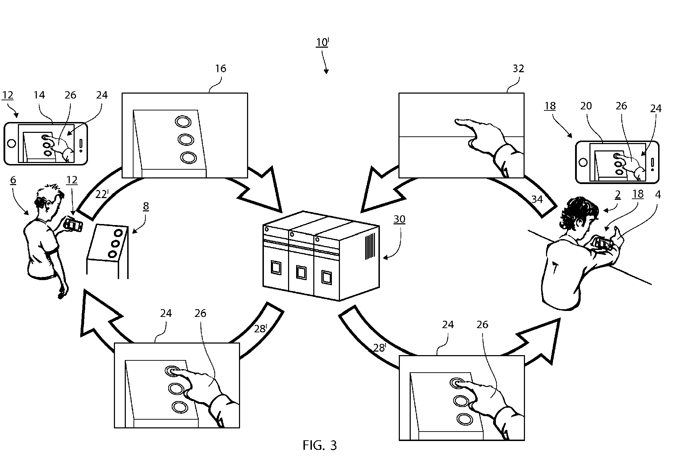

Fig. 3 shows a third embodiment of a method of providing a digitally represented visual instruction from a specialist operating a visual instruction device to a user in need of said visual instruction in relation to an object of interest, according to the first aspect of the present invention being performed in a second embodiment of a system for providing a digitally represented visual instruction according to the third aspect of the present invention,

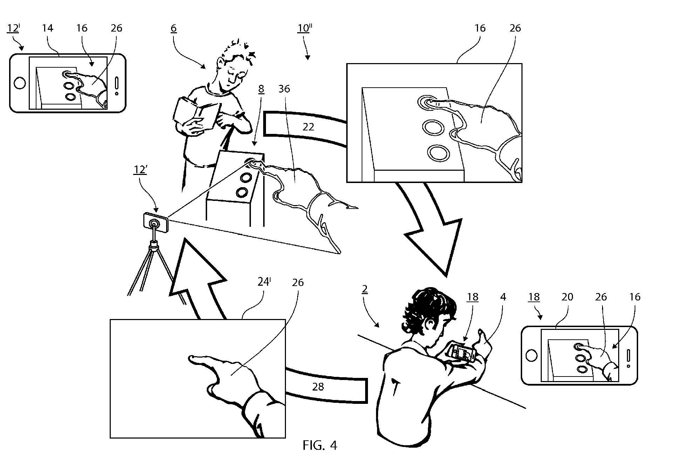

Fig. 4 shows a first embodiment of a method of providing a digitally represented visual instruction, from a specialist operating a visual instruction device to a user in need of said visual instruction in relation to an object of interest, according to the second aspect of the present invention being performed in the first embodiment of a system for providing a digitally represented visual instruction according to the fourth aspect of the present invention,

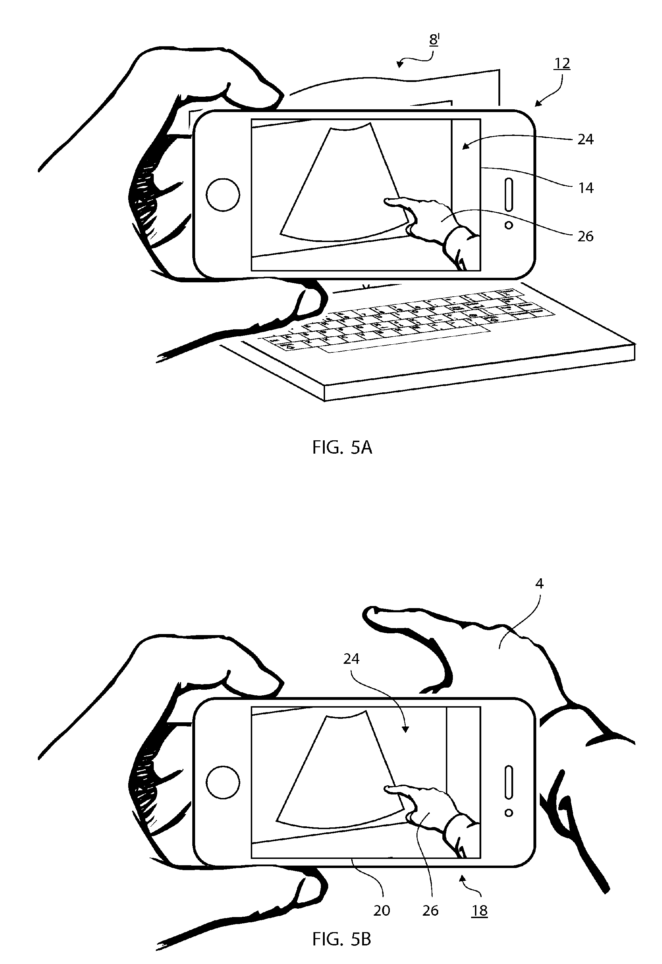

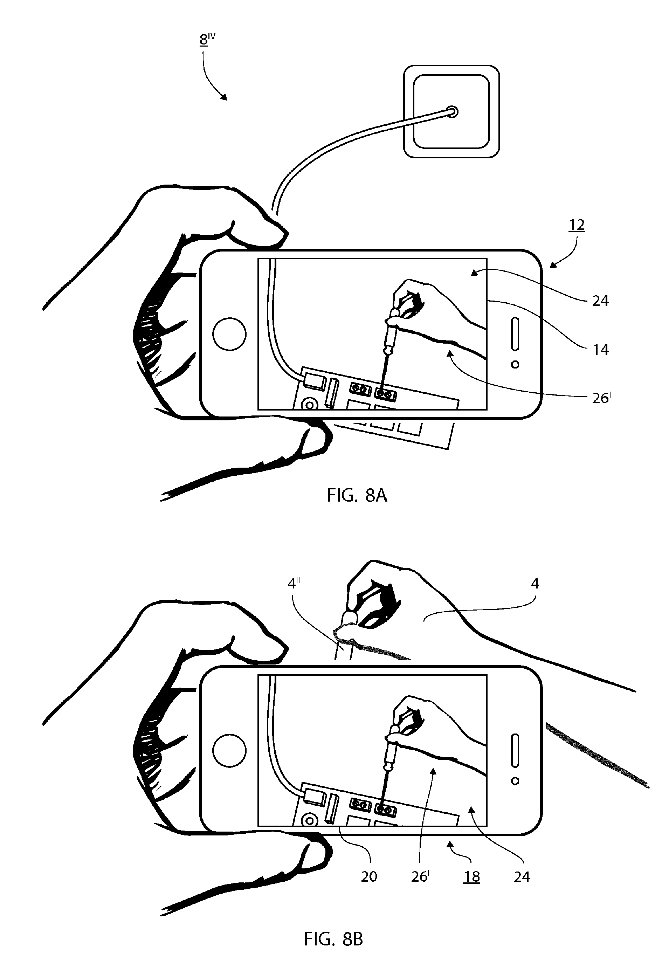

Figs. 5 - 8 shows embodiments of the method of providing a digitally represented visual instruction according to the first aspect of the present invention being performed with differing objects of interest, fig. 8 additionally showing the specialist using an object, in this case a screwdriver, as a part of the visual instruction device,

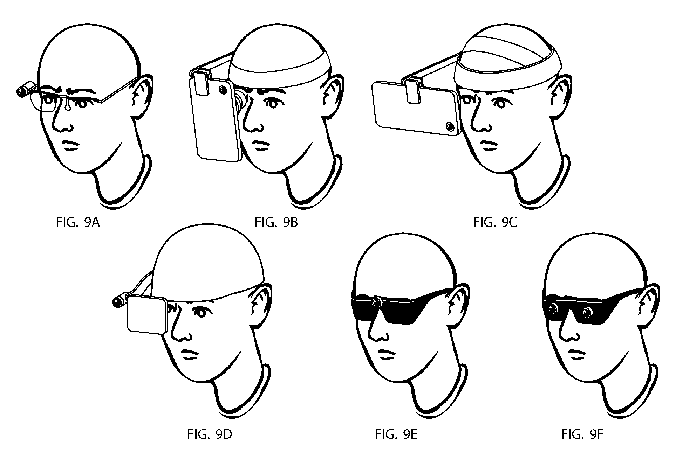

Fig. 9 shows different embodiments of the first and second mobile devices being affixable to the head of the user and the specialist, as well as headgear devices for holding the first and second mobile devices and being affixable to the head of the user and the specialist, and

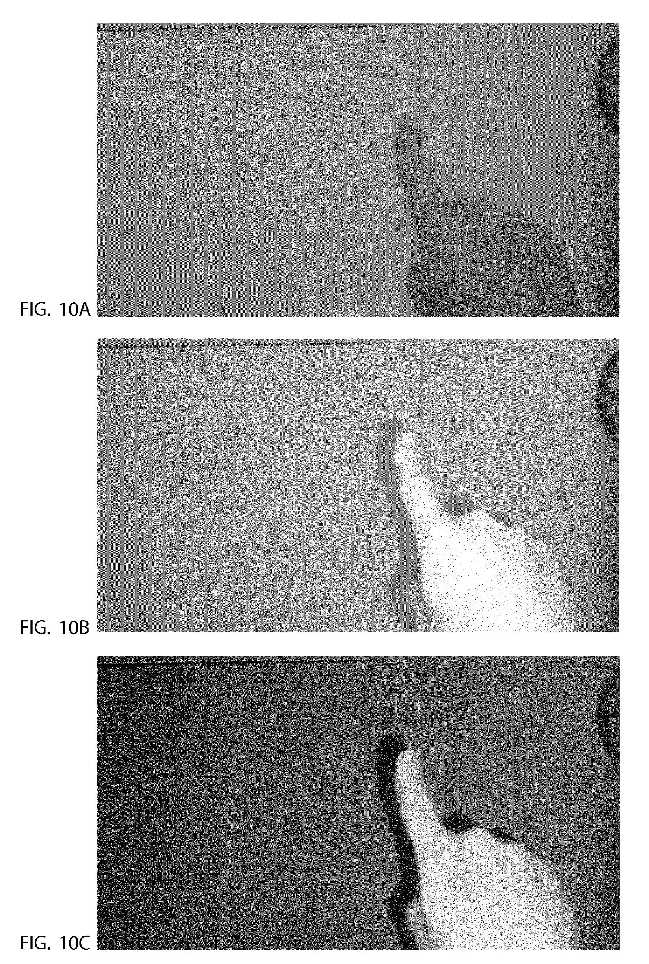

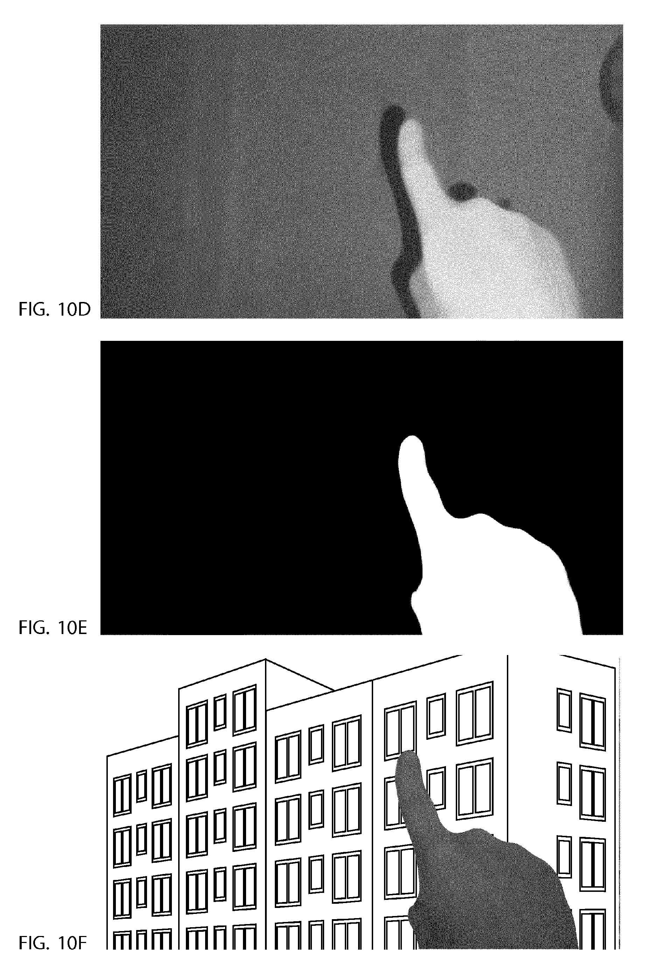

Fig. 10 shows foreground/background segmentation and background replacement steps in an embodiment of a method of providing a digitally represented visual instruction, from a specialist operating a visual instruction device to a user in need of said visual instruction in relation to an object of interest, according to the first aspect of the present invention.

In the below description, a superscript roman numeral added to a reference number indicates that the element referred to has the same or similar function as the element designated the non-superscripted reference number, however, differing in structure.

In the below description, a subscript Latin numeral added to a reference number indicates that the element referred to is a further one of the element designated the non-subscripted reference number.

When further embodiments of the invention are shown in the figures, the elements which are new, in relation to earlier shown embodiments, have new reference numbers, while elements previously shown are referenced as stated above. Elements which are identical in the different embodiments have been given the same reference numerals and no further explanations of these elements will be given.

Fig. 1 shows a first embodiment of a method of providing a digitally represented visual instruction according to the first aspect of the present invention being performed in the first embodiment of a system for providing a digitally represented visual instruction according to the third aspect of the present invention. The method provides a digitally represented instruction from a specialist 2 operating a visual instruction device represented by the hand 4 to a user 6 in need of the visual instruction in relation to a first scene comprising an object of interest represented by control panel 8. The system 10 comprises a first mobile device 12 comprising a first video camera (not shown), a first display 14, a first image processing circuit (not shown) and a first transmission-and receiving circuit (not shown). The first mobile device 12 is positioned so the first camera captures a first video stream 16 of a first scene including the control panel 8 and so that the user 6 can see the first display 14. The system 10 further comprises a second mobile device 18 comprising a second video camera (not shown), a second display 20, a second image processing circuit (not shown) and second transmission-and receiving circuit (not shown). The second mobile device 18 is positioned so the second video camera captures a second video stream (not shown) of a second scene comprising the hand 4 of the specialist 2, and so that the specialist 2 can see the second display 20.

The first video stream 16 is transmitted by the first transmission- and receiving circuit to the second mobile device 18, as indicated by the arrow 22, where it is received by the second transmission- and receiving circuit and transferred to the second image processing circuit.

The second image processing circuit performs a foreground/background segmentation operation on the second video stream and a background replacement operation on the second video stream with the first video stream 16, replacing the background behind the hand 4 in the second video stream with the images of the first video stream 16, resulting in a third video stream 24 comprising video images of the hand 4, representing the digitally represented visual instruction 26, with the video images in the first video stream 16 as background. Foreground/background segmentation and background replacement is well known in the art of video processing and may comprise the step of creating a travelling matte, masking out the hand 4 from the second video stream which is used to key the second video stream into the first video stream 16. The hand 4 may be well illuminated, for example by a small light source in the second mobile device 18 and positioned over a darker background and the step of creating a travelling matte may comprise a luma keying or chroma keying of the second video stream with the first video stream 16. Luma keying and chroma keying is well known in the art of video processing. Additionally or alternatively, the foreground/background segmentation operation may comprise other methods for foreground/background segmentation known in the art of video- and image processing, including but not limited to edge detection, shape detection and reference image subtraction.

The third video stream 24 is displayed on the second display 20 and essentially simultaneously transmitted by the second transmission- and receiving circuit to the first mobile device 12 as indicated by the arrow 24, where it is received by the first transmission- and receiving circuit and displayed on the first display 14, hence, the third video stream 24 is displayed essentially simultaneously on the first display 14 and the second display 20. Hence, the hand 4 of the specialist 2 is seen over the control panel 8 by both the specialist 2 and the user 6, and the specialist 2 may move the hand 4 to point to features in the control panel 8 or perform gestures or instructional motions over the control panel 8, thus providing the digitally represented visual instruction 26 to the user 6 and by looking at the second display 20, the specialist 2 has a natural and intuitive feedback for positioning his hand 4 and pointing correctly in relation to the control panel 8.

Fig. 2 shows a second embodiment of a method of providing a digitally represented visual instruction, from a specialist operating a visual instruction device to a user in need of said visual instruction in relation to an object of interest, according to the first aspect of the present invention being performed in the first embodiment of a system for providing a digitally represented visual instruction according to the third aspect of the present invention. Fig. 2 is similar to fig. 1, the difference being that the user 6 positions his hand 4^{I}, representing a further visual instruction device, between the first camera and the control panel 8 so that the hand 4^{I} is captured in the first video stream 16. Thus the hand 4^{I} becomes comprised by the first video stream 16 and thereby comprised by the third video stream 24 and viewable on the first and second displays 14 and 20. Hence, both the specialist 2 and the user 6 can point to features on the control panel 8 or perform gestures or instructional motions over the control panel 8 and both the specialist 2 and the user 6 by looking on the respective first and second display 14 and 20, have a natural and intuitive feedback for positioning his respective hand 4 and 4^{I} and pointing correctly in relation to the control panel 8.

Turning briefly to fig. 8, the specialist 2 and/or the user 6 may, in addition or instead of the respective hand 4, 4^{I}, operate an object such as a tool, in this case a screwdriver 4^{II}, representing fully or in part a visual instruction device, and operate the screwdriver 4^{II} to provide said visual instruction, see fig. 8B. In this case the foreground/background segmentation operation is configured to recognize, as is known in the art, instead of or in addition to the hand 4, 4^{I}, the screwdriver 4^{II} as foreground.

As an alternative, not shown in figs 1-2, the foreground/background segmentation operation may create video images of the hand 4 separated over a uniform background resulting in a raw third video stream containing only images of the hand 4 on a uniform background and a background replacement operation may be performed both in the first image processing circuit and in the second image processing circuit to form the third video stream 24 on the second mobile device 18 and display the third video stream 24 on the second display 20 and to form an identical fourth video stream on the first mobile device 12 and display it on the first display 14. The advantage of this configuration is that the raw third video stream may be compressed more efficiently when only comprising images of the separated hand 4, i.e. when only comprising the digitally represented visual instruction 26. Video images in the raw third video stream may labeled with references to video images in the first video stream 16, for example frame numbers, to ensure that the background replacement operations in the first image processing circuit and the second image processing circuit result in essentially identical video images.

Additionally, video image stabilization means to reduce distraction from shaky images, for example if the first mobile device 12 or the second mobile device 18 or both is/are handheld, may be included in the first camera, in the first image processing circuit, in the second video camera or in the second image processing circuit or any combinations hereof. Video image stabilization is well known in the art of video processing and may be either optical or electronic or a combination thereof.

The first mobile device 12 may comprise an accelerometer for detecting movement of the first mobile device 12. The signal from the accelerometer may be used by the video image stabilization means in performing video image stabilization.

The second mobile device 18 may comprise an accelerometer for determining movement of the second mobile device 18. The signal from the accelerometer may be used by the video image stabilization means in performing video image stabilization. Common smartphones and tablets typically comprise accelerometers.

In a particularly advantageous configuration, described below, where the hand 4 does not need to be positioned over a dark background, the specialist 2 holds up the second mobile device 18 in front of him so he can see the second display 20 for a short period, for example a second, and the image processing circuit captures an image from the second video stream and stores this as a background reference image, whereafter the specialist may insert his hand into the scene captured as the second video stream. The image processing circuit performs a feature detection on the background reference image and identifies features and stores a set of feature information and a first set of feature positions holding their positions. When the camera is moved and new content is introduced into an image in the second video stream, this content may be stitched to the background reference image using image stitching, which is well known in the art of panorama image stitching. The stitching process may take advantage of the already identified features.

The image processing circuit constantly performs a feature tracking between the stored set of features in the background reference image and an image in the second video stream and creates for each image in the second video stream a set of warping vectors by subtracting the positions of the features in the background image from the positions in the image in the second video stream. A reference image is created for each image in the second video stream by warping a copy of the background reference image using the warping vectors and cropping it to the size of the image in the second video stream. Warping and cropping is well known in the art of image processing. Hence, the reference image is now essentially identical to the image in the second video stream, except the hand 4 is not there, instead there is a background where the hand was. A binary travelling matte video stream may now be calculated by subtracting the reference image from the image in the second video stream and performing a binary thresholding operation resulting in pixels above a certain intensity being set to a first pixel value and other pixels being set to a second pixel value.

The travelling matte video stream may now be used to calculate the third video stream 24 comprising the hand 4 composited into the first video stream 16 by keying the second video stream over the first video stream 16. Keying with a travelling matte is well known in the art of video processing. Additionally, a blurring operation, for example a Gaussian blur, may be performed on the travelling matte before the keying for a more visually pleasing look, and additionally or alternatively other techniques known in the art of video keying may be applied.

When the second video camera is moved a bigger distance to the side from which the specialist 2 inserts his hand 4, an undesired situation may occur, where a part of an arm of the specialist may be occluding the background, hence the image content stitched to the reference background image may contain a part of the arm in some area instead of the background, and in this situation the reference image may in some area contain a part of the arm instead of the background and the calculated travelling matte may not cover a part of the arm near the edge of an image of the second video stream, leading to an image in the third video stream 24 where the arm of the hand 4 seems to be cut off near the edge of the image and appear floating. While this may not necessarily interfere with the visual instruction, i.e. the desired pointing and gesturing, it may be visually unpleasing. To counteract this situation, an additional modification of the binary mask may comprise performing an estimation of the extent of the arm towards the side of the binary mask. The estimation of the extent of the arm may comprise determining the sides of the mask corresponding to the sides of the image in the second video stream where additional content has been stitched onto and identifying edges in the binary mask within a distance of said sides of the mask. Identified edges which are not parallel to any of said sides of the mask may be extended, for example by curve interpolation, until any of said sides of the mask is reached and pixels in an area of the binary mask confined by the extended edges, any identified edges parallel to any of said sides of the mask and any of said sides of the masks may have their pixel values set to one.

The first and second image processing circuits may comprise the general data processors and/or the specialized signal processors of the first and second mobile devices, which first and second mobile devices as shown in the figures are preferably smartphones. Furthermore, the first and second image processing circuits may be embodied by software running on the general data processors and/or the specialized signal processors of the first and second mobile devices 12 and 18.

The transmission of the video streams may be performed by peer to peer transmission. Where the transmission bandwidth is high enough, for example when a 4G network or wireless LAN connection can be established, the transmission of the video streams 16 and 24 may be performed by html streaming to avoid having to set up transmission ports in any firewalls in the transmission path. Alternatively to peer to peer transmission, the transmission of the video streams may be routed through a server. This is shown in fig. 3 which shows a third embodiment of a method of providing a digitally represented visual instruction, from a specialist 2 operating a visual instruction device, (hand 4) to a user 2 in need of said visual instruction in relation to an object of interest (control panel 8), according to the first aspect of the present invention being performed in a second embodiment of a system 10^{I} for providing a digitally represented visual instruction 26 according to the third aspect of the present invention. The system 10^{I} shown in fig. 3 differs from the system 10 shown in figs 1 and 2 in that the first mobile device 12 transmits the first video stream 16, to a server 30, as indicated by arrow 22^{I}. Essentially simultaneously the second mobile device 18 transmits the second video stream 32 to the server 30 as indicated by the arrow 34. The server 30 performs a foreground/background segmentation operation, as described above, on the second video stream 32 and a background replacement operation, as described above, on the second video stream 32 with the first video stream 16, replacing the background behind the hand 4 in the second video stream 28 with the images of the first video stream 16, resulting in the third video stream 24 comprising video images of the hand 4, i.e. the digitally represented visual instruction 26 with the video images in the first video stream 16 as background. The third video stream 24 is then sent to the first and second mobile devices 12 and 18, as indicated by the arrows 28^{I}, and displayed essentially simultaneously on the first and second displays 14 and 20.

The advantages of the configuration as shown in fig. 3 is that a faster streaming scheme than html streaming may be used with less firewall set-up requirements and further that some of the above described image processing operations used for the foreground/background segmentation and the background replacement operation, as described above for forming or calculating the third video stream 24, such as feature detection and -tracking, keying etc., may be performed in the server 30, thereby reducing the requirements for the processing power of the mobile devices 12 and 18, allowing a great range of commercially available smartphones to be used as the mobile devices 12 and 18.

Figure 4 shows a first embodiment of a method of providing a digitally represented visual instruction from a specialist 2 operating a visual instruction device (hand 4) to a user 2 in need of said visual instruction in relation to the object of interest (control panel 8), according to the second aspect of the present invention being performed in first embodiment of a system 10" for providing a digitally represented visual instruction according to the fourth aspect of the present invention. The system 10" differs from the system 10 in that a modified first mobile device 12^{I}, comprising a projector (not shown) is used and that a modified third video stream 24^{I} comprising the digitally represented visual instruction 26 separated on a uniform dark or black background is generated from the second video stream and sent to the modified mobile device 12^{I}. The projector in the modified mobile device 12^{I} projects the third video stream onto the control panel 8, thus forming a projection 36 of the digitally represented visual instruction 26 upon the control panel 8. The first camera of the modified mobile device 12^{I} captures the first video stream 16, which now includes the digitally represented visual instruction 26 of the projection 36 and sends it to the second mobile device 18 as indicated by the arrow 22. On the second mobile device 18 the first video stream 16 is displayed on the second display 20, whereupon it is viewable by the specialist 2 allowing the specialist 2 to see the position of his hand 4 by the projection 36 and the digitally represented visual instruction 26 upon the object of interest 8. Thus, the specialist 2 can naturally and intuitively position and orient his hand 4 in relation to the object of interest comprised by the first video stream shown on the second display to point to features or perform gestures.

There is thus no need for background replacement operations of the second video stream with the first video stream 16 being performed neither in the first image processing circuit, nor in the second image processing circuit, thus decreasing the amount of calculations needed in the mobile devices 12 and 18. The first video stream 16 will contain images of the control panel 8 with images of the lighter hand 4 on a darker background, i.e. the projection 36, projected onto it. The first video stream is visible on the second display 20 and shown in fig. 4 although not necessary, on the first display 14.

The method and system shown in fig. 4 is advantageous in that it requires less computational resources in the first and second mobile devices 12 and 20 and in that it frees the user 6 from having to look at the first display 14, hence he may not need to hold the first display 14 up in front of him but may place the first mobile device 12 on a stand or surface at hand or he may even wear it, for example in a neck string, a head belt or a hardhat: This allows the user to move about the object of interest and it allows him to have both his hands free so he can for example perform actions with both hands on the control panel 8 or use one hand to hold for example a manual and the other hand to point or perform actions to the control panel 8.

An image enhancement operation may be performed on the modified third video stream 24^{I} before it is projected by the projector. The image enhancement operation may comprise a contrast enhancement, a sharpening, an edge sharpening, a thresholding operation or combinations hereof.

If the specialist 2 and the second mobile device 18 are in a dark environment, then the modified third video stream 24^{I} may be provided by simply copying the second video stream or alternatively the second video stream is used as the modified third video stream 24^{I}.

Otherwise the modified third video stream is provided by generating it from the second video stream using above described foreground/background segmentation and using a simple background replacement operation on the second video stream with a uniform black or dark background.

As an alternative to that shown in fig. 4, a separate projector such as a pocket projector and the first mobile device 12 shown in figs 1-3, may be used. In this case the projector may be connected to the first mobile device 12 to receive the third video stream 24^{I} received on the first mobeil device 12 from the second mobile device 18, or alternatively the projector may receive the third video stream 24^{I} directly from the second mobile device 18, or via a further mobile device or computer to which the projector is connected.

In case the modified first mobile device 12^{I} is used it may comprise a mirror (not shown) to redirect the beam of the projector, or alternatively the capturing direction of the first camera, if the direction of the projector and the camera are not the same. The first image processing circuit may perform a mirroring function to compensate for the mirror.

In the methods and systems shown in the figures push notifications, ring tones or vibration may be used to alert the specialist 2 that the user 6 wishes to receive visual instructions from the specialist 2.

Further, in the methods and systems shown in the figures, audio communication between the user 6 and the specialist 2 is preferably provided using the cellular network or via IP telephony. Preferably, the audio communication is bi directional.

In the systems shown in figs. 1-4, a first software application present on the first mobile device 12 may be used to control the process of capturing and sending the first video stream 16 and receiving and displaying the third video stream 24. A second software application present on the second mobile device 18 may be used to control the process of capturing the second video stream, performing the foreground/background segmentation, providing the third video stream, including where applicable the background replacement operation on the second video stream with the first video stream 16 and sending the third video stream 24 to the first mobile device 12 and displaying the third video stream 24, or alternatively, in the method shown in fig 4, display the first video stream 16.

Alternatively, a single software application having the capabilities of the first and second software applications, as listed above, may be used in both first and second mobile devices 12 and 18. In this case the user 6 may set the software application to "user mode", thus indicating that he would like to receive visual instruction and that the operations of the first software application, as described above, should be executed on the first mobile device 12. Likewise, the specialist 2 may set the software application to "specialist mode", thus indicating that he is prepared to provide visual instruction and that the operations of the second software application, as described above, should be executed on the second mobile device 12.

The connection between the user 6 and the specialist 2 may be direct, for example in case the user 6 knows or has access to contact details, for example a telephone number, IP address, online identity or other identifying information of the specialist. This may be the case for example where the user 6 and the specialist 2 are related by for example being agent and client, friends, workmates, part of the same organization, etc. Alternatively, the connection between the user 6 and the specialist 2 may be arranged, possibly brokered, via a communications centre, in which case the user 6 need only know or have access to contact details to the communication centree. This may be the case where the user 6 and the specialist 2 do not know each other, or where there are many specialists who can and are willing to assist the user 2, examples being customer and customer care service, private person and specialist such as plumber, computer technician or, electrician. In this case the communication centre may receive the request to obtain visual instruction from the user 6 and present it to several specialists, which specialists are then allowed to make their offers to the user 6 whereafter the user 6 may select one of the specialists to obtain the visual instructions from.

In one business model the communications centre may charge a fee from the specialists for being presented with the user's request and being allowed to make their offers to the user, and/or from the users wishing to have their request being presented to the specialists. Fees may also be charged for each time unit, e.g. minute, that the visual instructions are provided to the user.

In another business model there is no communications centre, however, a fee is charged from the user and the specialist by the maker of the software application for each mobile device on which the software application is installed. In some cases the software application may be provided free of charge, however, the software application may contains adverts or commercials from which the maker of the software application may collect revenue, the latter case being compatible with a communications centre as described above, such that the user 6 needs to use the communications centre if he is in need of visual instruction from a specialist he does not have the contact details to. Further, in the case shown in fig. 3 where the server 30 is used, one business model may include providing the software application free of charge, but requiring a subscription or the payment of a fee to use the server 30.

The methods described above with reference to figs 1-3 may be performed also when the first display 14 is transparent, provided that the first mobile 12, when receiving the third video stream 24, generates a fourth video stream (not shown), or alternatively generates a modified third video stream by subtracting the first video stream from the third video stream such that all pixels having the same pixel values in both the first and third video stream 15 and 24, are set to pixel values which yield transparent pixels when displayed on the first display.

Alternatively, the methods shown in figs. 1-3 may be performed also when the first display 14 is transparent, provided that the second video stream 32 or the third video stream 24 is first sent to the first mobile device 12, in which a fourth video stream or a modified third video stream comprising the digitally represented visual instruction 26 in the foreground and with a background having pixel values, which results in the background being transparent when displayed on the first display, is generated by the first mobile device 12 by a foreground/background segmentation and background replacement on the second or third video stream as described above.

Fig. 5 shows embodiments of the method of providing a digitally represented visual instruction according to the first aspect of the present invention being performed with an object of interest represented by a screen 8^{I} of a computer associated with medical equipment. In this case the user 6, for example a midwife at a maternity institution standing in front of the screen 8^{I} is provided with the digitally represented visual instruction 26, as shown in fig. 5A, from the specialist 2, for example a doctor at another location such as his or her home, who can provide the digitally represented visual instruction 26 using the second mobile device 18 as shown in fig. 5B. The digitally represented visual instruction 26 may for example help the user 2 to interpret the screen 8^{I} or to find interesting areas in the screen 8^{I}. The specialist 2 may for example instruct the user 2, by pointing with hand 4, to enlarge a specific part of the screen 8^{I}.

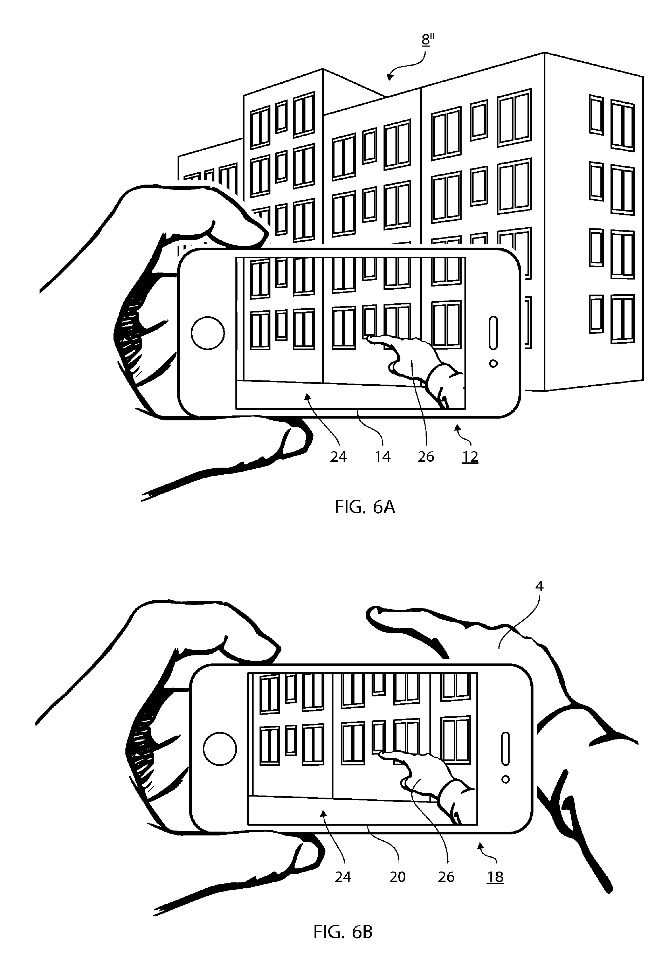

Fig. 6 shows embodiments of the method of providing a digitally represented visual instruction according to the first aspect of the present invention being performed with an object of interest represented by a building 8". In this case the user 6, for example a subcontractor or craftsman, standing in front of the building 8", is provided with the digitally represented visual instruction 26, as shown in fig. 6A, from the specialist 2, for example an employer, foreman, customer, or architect at another location, who can provide the digitally represented visual instruction 26 using the second mobile device 18 as shown in fig. 6B. The digitally represented visual instruction 26 may for example help the user 2 to find which part of the building 8" he should work on. The specialist 2 may for example instruct the user 2, by pointing with the hand 4, to move closer to a part of the building 8" and focus on a colour or texture of the building materials.

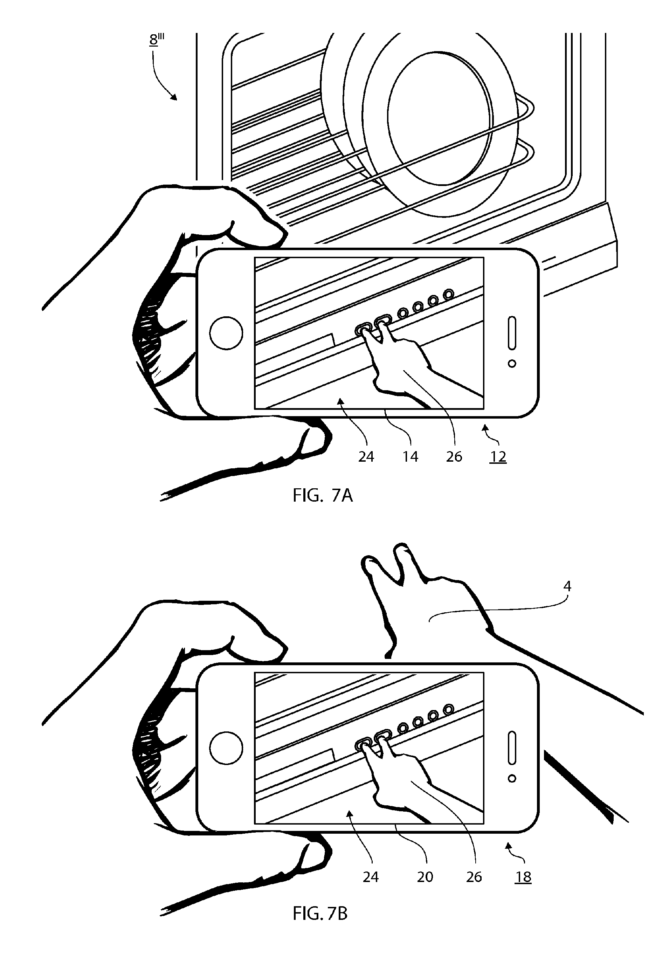

Fig. 7 shows embodiments of the method of providing a digitally represented visual instruction according to the first aspect of the present invention being performed with an object of interest represented by a dishwasher 8^{III} with a control panel. In this case the user 6, for example a home owner, standing in his or her home in front of the dishwasher 8^{III} is provided with the digitally represented visual instruction 26, as shown in fig. 7A, from the specialist 2, for example a customer service employee or repair man at another location, who can provide the digitally represented visual instruction 26 using the second mobile device 18 as shown in fig. 7B. The digitally represented visual instruction 26 may for example help the user 6 to operate the dishwasher 8^{III}. The specialist 2 may for example instruct the user 6, by pointing with hand 4, to simultaneously press two buttons on the control panel of the dishwasher 8^{III} to reset the dishwasher to factory default.

Fig. 8 shows embodiments of the method of providing a digitally represented visual instruction according to the first aspect of the present invention being performed with an object of interest represented by an electrical installation 8^{IV}. In this case the user 6, for example a home owner, standing in his or her home in front of the electrical installation 8^{IV} is provided with the digitally represented visual instruction 26^{I} shown in fig 8A, which digitally represented visual instruction 26^{I} as shown in fig 8B includes both the hand 4 and the screwdriver 4^{II} to provide the visual instruction. The digitally represented visual instruction 26^{I} may for example help the user 6 to troubleshoot the electrical installation 8^{IV}. The specialist 2 may for example instruct the user 6, by positioning and moving screwdriver 4^{II}, to loosen a screw in the electrical installation 8^{IV}.

Fig. 9A shows an alternative embodiment of a first mobile device 12^{II} in the form of glasses 38 representing a first headgear device. A transparent first display 14^{I} is held by the glasses and positioned in front of one eye of the user 6 as the glasses 38 are affixed, by being worn by the user 6, to the head of the user 6. The other eye of the user 6 is free. The glasses 38 carry a first camera 40 which is positioned adjacent the transparent first display 14^{I}. A computing module, a transceiver module, and a power supply is integrated with the glasses 38 (not shown).

Fig. 9B shows a first mobile device being 12 used with a headband 42, to which an arm 44 carrying a holding device represented by clamp 46 and a lens 48 is attached. The headband 42, arm 44, clamp 46 and lens 48 together represent a first headgear holding device. The clamp 46 represents a first holding device and holds the first mobile device 12. The lens 48 helps the eye of the user 6 to focus properly on the first display.

Fig. 9C shows a first mobile device being 12 used with a modified headband 42^{I} having a vertical headband 50 for a stronger fixation to the head of the user 6, the headband 42^{I} carrying a modified arm 44^{I}, which is longer than the arm 44. As the arm 44^{I} is longer, there is no need for lens 48 because the first mobile device 12 is positioned at a suitable distance from the eyes of the user 6. The first mobile device 12 is held by the clamp 46, such that the first display is viewable by both eyes of the user 6. The vertical headband 50 ensures that the headband 42 and the vertical headband 50 do not slip on the head of the user 6 due to the increased torque applied on them from the weight of the first mobile device 12 on the arm 44^{I}.

Fig. 9D shows a further alternative embodiment of a first mobile device 12^{III} in the form of a helmet 52 representing a first headgear device. A non-transparent first display 14" and a first camera 40 are connected to the helmet 52 via an arm 54. A computing module, a transceiver module and a power supply is mounted on the back of the helmet (not shown).

Fig. 9E shows a further alternative embodiment of a first mobile device 12^{IV} in the form of glasses 56 representing a first headgear device. A transparent first display 14^{III} and a further transparent first display 14^{III}₁ are integrated with a frame and a camera 40 to form the glasses 56. Both first displays 14^{III} and 14^{III}₁ show the same video stream.

A computing module, a transceiver module and a power supply are integrated with the glasses 56 (not shown).

Fig. 9F shows a further alternative embodiment of a first mobile device 12^{V} in the form of glasses 56^{I} representing a first headgear device. A first display 14^{IV} and a further transparent first display 14^{IV}₁ are integrated with a frame and a first camera 40 and a further first camera 40₁ to form the glasses 56^{I}. The first display 14^{III} is operably connected to camera 40 and the further first display 14^{III}₁ is operably connected to the further first camera 40₁ to provide stereoscopic vision for the user 6.

A computing module, a transceiver module, and a power supply is integrated with the glasses 56^{I} (not shown).

Although figs. 9A-9F have been described with reference to the user 6, the first mobile device 12 and first display 14, the figs and description apply also to the second mobile device 18 and the specialist 2 with the necessary modifications as regards first-second and user-specialist etc.

Fig. 10 shows foreground/background segmentation and background replacement steps in an embodiment of a method of providing a digitally represented visual instruction, from a specialist operating a visual instruction device to a user in need of said visual instruction in relation to an object of interest, according to the first aspect of the present invention.

The steps shown in fig. 10 require that the second mobile device 18 is provided with a light source, for example an LED. The led is energized intermittently for illuminating every second frame of the second video stream.

Further, the steps shown in fig. 10 require that the ambient lighting of the second scene is not too intense. Thus, the steps shown in fig. 10 are best suited for second scenes that are indoors.

Fig. 10A shows a second scene that has been recorded as a first frame of the second video stream. The frame shown in fig. 10A was recorded with the light source off and thus approximates how the specialist 2 sees the second scene. The figure clearly shows a hand having an outstretched index finger, the hand representing the visual instruction device, in the foreground and a background comprising a wall and a double door with a door frame. The straight lines of the double door and door frame are clearly seen in fig. 10A. The lighting and brightness of fig. 10 is uniform, the background is a little brighter than the hand.

Fig 10B shows the same scene as fig. 10A as it has been recorded as a second frame of the second video stream. The second frame has been recorded with the light source on. Due to the difference in distance between the light source and the hand on one side, and between the light source and the background, i.e. the wall, double door and door frame, on the other side, the hand is now brighter than the background, even though the background in fig 10B is brighter than the background in fig. 10A. It is still possible to see the straight lines of the double door and door frame in the background whereas some of the features of the hand have now been lost due to the brightness.

Fig. 10C shows a differential frame which is the result of a subtracting a grayscale transformation of fig. 10B from a grayscale transformation of fig. 10A, i.e. fig. 10C equals grayscale(fig. 10A) - grayscale(fig. 10B). Fig. 10C shows the hand brightly lit, corresponding somewhat to the hand in fig. 10B, whereas the background, i.e. the wall, double door and door frame, are darker corresponding somewhat to the background in fig. 10A.

Fig. 10D shows a filtered differential frame which is the result of a median filtering of fig. 10C, i.e. fig. 10D equals median filtering(fig. 10C). Median filtering replaces the value of each pixel in the image with the median of the values of the neighbouring pixels. This has the effect of removing noise and small details in the image, thus in fig. 10D it is no longer possible to see details of the hand and although some vague features of the background are still present it is no longer possible to see the straight lines of the double door and door frame. Although fig. 10D shows the result of median filtering, other types of noise filtering is possible.

Fig. 10E shows a foreground mask which is the result of threshold operation on fig. 10E, i.e. fig. 10E equals threshold(fig. 10D). A threshold operation sets the pixel value of pixels having a pixel value below a certain threshold to 0, i.e. black, and sets the pixel value of pixels having a pixel value above the threshold to 1, i.e. white. Thus, in fig. 10E all the bright pixels in fig. 10D, i.e. the pixels defining the hand, are set to 1, i.e. white, whereas all the dark pixels in fig. 10D, i.e. the pixels defining the background, are set to 0, i.e. black. The foreground mask indicates, by the pixel value 1, which pixels belong to a foreground segment of the first frame of the second video stream, i.e. the hand, and by the pixel value 0, which pixels belong to the background segment of the first frame of the second video stream, i.e. the background wall, double door, door frame and wall.

The foreground mask shown in fig. 10E may now be used in a background replacement operation to replace the background of fig. 10A, i.e. the background of the first frame of the second video stream, with the background of a temporally corresponding frame of the first video stream 16 for generating a frame of the third video stream 24. The frame of the third video stream 24 is generated by multiplying the first frame of the second video stream, i.e. fig. 10A with the foreground mask, i.e. fig. 10E, and adding the product of this multiplication to a frame of the first video stream multiplied with the inverse of the foreground mask. In a formula fig. 10F equals (fig. 10A x fig. 10E) + (frame from first video stream 16 x (1 - fig. 10E)).

The inverse of the foreground mask is a background mask which indicates, by the value 1, which pixels belong to the background.

Thus, fig. 10F shows the hand from fig 10A segmented from the background of fig. 10A and positioned over a frame from the first video stream 16, in this case a frame depicting a building.

The steps illustrated with reference to fig. 10 require very little computational power and are especially suited for when the third video stream 24 is generated by the second mobile device 18. The transformations and operations resulting in figs. 10C-10F are simple matrix operations and do not involve any tracking of feature recognition.

If the lighting of the second scene is too bright, for example outdoors on a sunny day, the light source will not be able to illuminate the hand suitably for causing it to be recorded brighter in fig. 10B than in fig. 10A. It is therefore contemplated that the light source, as an alternative to emitting visible light, which is the case in fig. 10B, may instead or in addition emit light of a special wavelength which allow the light source to illuminate the hand despite the light from the sun. This special wave length may for example be infrared. In this case, the second camera of the second mobile device 18 must also be capable of recording this special wavelength.

### POINTS CHARACTERISING THE INVENTION

1. A method of providing a digitally represented visual instruction from a specialist operating a visual instruction device to a user in need of said visual instruction in relation to an object of interest, the method comprising the steps of:
   i. providing a first mobile device associated with said user, said first mobile device comprising:
      a. a first camera,
   ii. providing a second mobile device associated with said specialist, said second mobile device comprising:
      b. a second camera,
      c. a second display,
   iii. positioning said first mobile device such that said first camera is directed towards a first scene comprising said object of interest,
   iv. capturing a first video stream of said first scene by said first camera,
   v. positioning said second mobile device such that said second camera is directed towards a second scene comprising said visual instruction device and such that said second display is viewable by said specialist,
   vi. capturing a second video stream of said second scene by said second camera, said second video stream comprising a digital representation of said visual instruction device, said digital representation of said visual instruction device defining said digitally represented visual instruction.
   vii. generating a third video stream comprising said digitally represented visual instruction in the foreground and said first video stream in the background,
   viii. displaying said third video stream on said second display, such that said specialist may view said third video stream and in response to said third video stream and in order to generate said digitally represented visual instruction, operate said visual instruction device in relation to said object of interest.
   ix. sending said digitally represented visual instruction to said first mobile device and receiving said digitally represented visual instruction by said first mobile device, and,
   x. displaying said digitally represented visual instruction to said user.
2. The method according to point 1 further comprising the steps of:
   xi. sending said first video stream to said second mobile device and receiving said first video stream by said second mobile device, and

xii. generating said third video stream by said second mobile device.
3. The method according to point 1, further comprising the steps of
   xiii. providing a server capable of generating said third video stream,
   xiv. sending said first video stream and said digitally represented visual instruction to said server and receiving said first video stream and said digitally represented visual instruction by said server,
   xv. generating said third video stream by said server, and
   xvi. sending said third video stream to said second mobile device and receiving said third video steam by said second mobile device.
4. The method according to any preceding point wherein said first mobile device further comprises:
   d. a first display,
      and said positioning of said first mobile device further being such that said first display is viewable by said user, and said digitally represented visual instruction is displayed on said first display
5. The method according to point 4, said first camera and said first display being provided on opposite sides of said first mobile device.
6. The method according to point 5, further comprising the step of:
   xvii. positioning said first mobile device such that said first display is provided on a visual axis between said object of interest and an eye of said user, or alternatively positioning said first mobile device such that said first camera and said first display are provided on a visual axis between said object of interest and the eyes of said user,
7. The method according to any of the points 4-6 further comprising the steps of:
   xviii. sending said third video stream to said first mobile device and receiving said third video stream by said first mobile device, and,
   xix. displaying said third video stream on said first display.
8. The method according to any of the points 4-6, further comprising the steps of:
   xx. generating a fourth video stream comprising said digitally represented visual instruction in the foreground and said first video stream in the background by said first mobile device, and,
   xxi. displaying said fourth video stream on said first display.
9. The method according to point 6, said first display being optically transparent, and said digitally represented visual instruction being displayed on a part of said first display, such that said user may see said digitally represented visual instruction on said part of said first display, and said object of interest optically through said first display, simultaneously.
10. The method according to any of the preceding points, wherein said first mobile device further comprises
   e. a first projection device,
      and wherein the method further comprises the step of:
      xxii. projecting said digitally represented visual instruction onto said object of interest.
11. The method according to any of the preceding points, said visual instruction device comprising the hand of the specialist and/or an object held by said hand.
12. The method according to any of the preceding points, said second camera and said second display being provided on opposite sides of said second mobile device.
13. The method according to point 12, further comprising the step of:
   xxiii. positioning said second mobile device such that said second display is provided on a visual axis between said visual instruction device and an eye of said specialist, or alternatively positioning said second mobile device such that said second camera and said second display are provided on a visual axis between said visual instruction device and the eyes of said specialist.
14. The method according to any preceding point, said first mobile device being a first headgear device, preferably a helmet or goggles, said first headgear device being affixable to the head of said user and being adapted to position said first display such that it is viewable by said user when said first headgear device is affixed to the head of said user.
15. The method according to any preceding point, said second mobile device being a second headgear device, preferably a helmet or goggles, said second headgear device being affixable to the head of said specialist and being adapted to position said second display such that it is viewable by said specialist when said second headgear device is affixed to the head of said specialist.
16. The method according to any of the points 1-13, further comprising the steps of:
   xxiv. providing a first headgear holding device, preferably a helmet, headband or goggles affixable to the head of said user, comprising a first holding device for holding said first mobile device and a first positioning device interposed between said first headgear holding device and said first holding device, said first positioning device being adapted to position said first mobile device such that said first display is viewable by said user when said first headgear holding device is affixed to the head of said user, and
   xxv. affixing said first headgear holding device to the head of said user and attaching said first mobile device to said first holding device, or alternatively or additionally the steps of:
      xxvi. providing a second headgear holding device, preferably a helmet, headband or goggles, affixable to the head of said specialist, comprising a second holding device for holding said second mobile device, and a second positioning device interposed between said second headgear holding device and said second holding device, said second positioning device being adapted to position said second mobile device such that said second display is viewable by said specialist when said second headgear holding device is affixed to the head of said specialist, and
      xxvii. affixing said second headgear holding device to the head of said specialist and attaching said second mobile device to said second holding device.
17. The method according to any of the preceding points, said generation of said third video stream being performed essentially simultaneously with said capturing of said first video stream and said capturing of said second video stream.
18. The method according to any preceding point, wherein said second mobile device further comprises:
   f. a light source for illuminating said visual instruction device,
      and the method further comprises the step of:
   xxviii. illuminating said visual instruction device by said light source.
19. The method according to any preceding point further comprising the steps of:
   xxix. performing a foreground/background segmentation on said second video stream by segmenting each video image of said second video stream into a foreground video image segment and a background video image segment such that said digitally represented visual instruction is comprised by said foreground video image segment, and,
   xxx. performing a background replacement on said second video stream with said first video stream by combining each foreground video image with a temporally corresponding video image from said first video stream.
20. The method according to any of the points 1-17, wherein said second mobile device further comprises:
   g. a light source for illuminating said visual instruction device,
      and step vii comprises the substeps of:
   h. recording a first frame of said second video stream by said second camera while said light source does not illuminate said visual instruction device,
   j. recording a second frame of said second video stream by said second camera while said light source illuminates said visual instruction device,
   k. generating a differential frame by subtracting said second frame transformed into grayscale from said first frame transformed into grayscale,
   m. optionally generating a filtered differential frame by noise filtering said differential frame, wherein said noise filtering may be median filtering,
   n. generating a foreground mask by threshold filtering said differential frame or said filtered differential frame or, and
   o. generating a frame of said third video stream by adding the product of said first frame and said foreground mask to the product of a frame of said first video stream and the inverse of said foreground mask.
21. A method of providing a digitally represented visual instruction from a specialist, operating a visual instruction device, to a user in need of said visual instruction in relation to an object of interest, the method comprising the steps of:
   xxxi. providing a first mobile device associated with said user, said first mobile device comprising:
      p. a first camera,
   xxxii. providing a projection device associated with said user and capable of projecting said digitally represented visual instruction,
   xxxiii. providing a second mobile device associated with said specialist, said second mobile device comprising:
      q. a second camera,
      r. a second screen,
   xxxiv. positioning said first mobile device such that said first camera is directed towards a first scene comprising said object of interest,
   xxxv. positioning said projection device such that said projection device is capable of projecting said digitally represented visual instruction onto said first scene,
   xxxvi. positioning said second mobile device such that said second camera is directed towards a second scene comprising said visual instruction device and such that said second screen is viewable by said specialist,
   xxxvii. capturing a first video stream of said first scene by said first camera,
   xxxviii. capturing a second video stream of said second scene by said second camera, said second video stream comprising a digital representation of said visual instruction device, said digital representation of said visual instruction device defining said digitally represented visual instruction.
   xxxix. providing a third video stream using said second video stream, said third video stream comprising said digitally represented visual instruction in the foreground on a dark or black background,
      xl. sending said third video stream to said projection device and receiving said third video stream by said projecting device,
      xli. projecting said third video stream onto said first scene, thereby providing said digitally represented visual instruction to said user, and thereby introducing said digitally represented visual instruction into said first scene,
      xlii. sending said first video stream to said second mobile device and receiving said first video stream by said second mobile device,
      xliii. displaying said first video stream on said second screen such that said specialist may view said first video stream, and in response to said first video stream, and in order to generate said digitally represented visual instruction, operate said visual instruction device in relation to said object of interest.
   22. The method according to point 21, said projection device being comprised by said first mobile device.
   23. The method according to any of the points 21-22, further comprising the steps of:
      xliv. analyzing said second video stream for determining whether:
         s. said second video stream comprises said digitally represented visual instruction on a uniform dark or black background, in which case said providing of said third video stream comprises copying said second video stream, or
         t. said second video stream does not comprise said digitally represented visual instruction on a uniform dark or black background, in which case said providing of said third video stream comprises the substeps of:
            i. performing a foreground/background segmentation on said second video stream by segmenting each video image of said second video stream into a foreground video image and a background video image such that said digitally represented visual instruction is comprised by said foreground video image, and,
            ii. performing a background replacement on said second video stream by combining each foreground video image with a dark or black background image.
   24. A system for providing a digitally represented visual instruction from a specialist operating a visual instruction device to a user in need of said visual instruction in relation to an object of interest, the system comprising:
      a first mobile device comprising a first camera,
      a second mobile device comprising a second camera and a second display,
      said first camera being configured to capture a first video stream of a first scene comprising said object of interest,
      said second camera and the second display being provided on the second mobile device such that second camera can be directed towards a second scene comprising said visual instruction device while said second display is viewable by said specialist,
      said second camera being further configured to capture a second video stream of said second scene, said second video stream comprising a digital representation of said visual instruction device, said digital representation of said visual instruction device defining said digitally represented visual instruction,
      said second mobile being configured to generate a third video stream comprising said digitally represented visual instruction in the foreground and said first video stream in the background, and
      said second mobile device being configured to display said third video stream on said second display so that said specialist may view said third video stream, and in response to said third video stream, and in order to generate said digitally represented visual instruction, operate said visual instruction device in relation to said object of interest,
      said second mobile device further being configured to provide said digitally represented visual instruction to said first mobile device, and,
      said first mobile device being configured to display said digitally represented visual instruction to said user.
   25. A system for providing a digitally represented visual instruction from a specialist operating a visual instruction device to a user in need of said visual instruction in relation to an object of interest, the system comprising:
      a first mobile device comprising a first camera,
      a projection device
      a second mobile device comprising a second camera and a second display,
      said first camera being configured to capture a first video stream of a first scene comprising said object of interest,
      said second camera and the second display being provided on the second mobile device such that second camera can be directed towards a second scene comprising said visual instruction device while said second display is viewable by said specialist,
      said second camera being further configured to capture a second video stream of said second scene, said second video stream comprising a digital representation of said visual instruction device, said digital representation of said visual instruction device defining said digitally represented visual instruction,
      said second mobile being configured to provide a third video stream, using said second video stream, said third video stream comprising said digitally represented visual instruction in the foreground on a dark or black background,
      said second mobile device being configured to send said third video stream to said projector,
      said projector being configured to receive said third video stream and to project said third video stream onto said object of interest in order to introduce said digitally represented visual instruction into said first scene.

### List of parts with reference to the figures:

| |
|---|
| 2. Specialist |
| 4. Hand |
| 6. User |
| 8. Control panel |
| 10. System |
| 12. First mobile device |
| 14. First display |
| 16. First video stream |
| 18. Second mobile device |
| 20. Second display |
| 22. Arrow indicating sending the first video stream 16 from the first mobile device 12 to the second mobile device 18 |
| 24. Third video stream |
| 26. Digitally represented visual instruction |
| 28. Arrow indicating sending the third video stream 24 from the second mobile device 18 to the first mobile device 12 |
| 30. Server |
| 32. Second video stream |
| 34. Arrow indicating sending the second video stream 32 from the second mobile device 18 to the server 30 |
| 36. Projection |
| 38. Glasses |
| 40. First camera |
| 42. Headband |
| 44. Arm |
| 46. Clamp |
| 48. Lens |
| 50. Vertical headband |
| 52. Helmet |
| 54. Arm |
| 56. Glasses |

## Claims

1. A method of providing a digitally represented visual instruction from a specialist operating a visual instruction device, said visual instruction device preferably comprising the hand of said specialist and/or an object held by said hand, to a user in need of said visual instruction in relation to an object of interest, the method comprising the steps of:
i. providing a first mobile device associated with said user, said first mobile device comprising:
a. a first camera,
ii. providing a second mobile device associated with said specialist, said second mobile device comprising:
b. a second camera,
c. a second display,
iii. positioning said first mobile device such that said first camera is directed towards a first scene comprising said object of interest,
iv. capturing a first video stream of said first scene by said first camera,
v. positioning said second mobile device such that said second camera is directed towards a second scene comprising said visual instruction device and such that said second display is viewable by said specialist,
vi. capturing a second video stream of said second scene by said second camera, said second video stream comprising a digital representation of said visual instruction device, said digital representation of said visual instruction device defining said digitally represented visual instruction.
vii. generating a third video stream comprising said digitally represented visual instruction in the foreground and said first video stream in the background,
viii. displaying said third video stream on said second display, such that said specialist may view said third video stream and in response to said third video stream and in order to generate said digitally represented visual instruction, operate said visual instruction device in relation to said object of interest.
ix. sending said digitally represented visual instruction to said first mobile device and receiving said digitally represented visual instruction by said first mobile device, and,
x. displaying said digitally represented visual instruction to said user.

2. The method according to claim 1 further comprising the steps of:
xi. sending said first video stream to said second mobile device and receiving said first video stream by said second mobile device, and
xii. generating said third video stream by said second mobile device.

3. The method according to claim 1, further comprising the steps of
xiii. providing a server capable of generating said third video stream,
xiv. sending said first video stream and said digitally represented visual instruction to said server and receiving said first video stream and said digitally represented visual instruction by said server,
xv. generating said third video stream by said server, and
xvi. sending said third video stream to said second mobile device and receiving said third video steam by said second mobile device.

4. The method according to any preceding claim, wherein said first mobile device further comprises:
d. a first display,
and said positioning of said first mobile device further being such that said first display is viewable by said user, and said digitally represented visual instruction is displayed on said first display

5. The method according to claim 4, said first camera and said first display being provided on opposite sides of said first mobile device, and wherein the method further preferably comprises the steps of:
xvii. positioning said first mobile device such that said first display is provided on a visual axis between said object of interest and an eye of said user, or alternatively said first mobile device, such that said first camera and said first display are provided on a visual axis between said object of interest and the eyes of said user.

6. The method according to any of the claims 4-5, further comprising the steps of:
xviii. sending said third video stream to said first mobile device and receiving said third video stream by said first mobile device, and,
xix. displaying said third video stream on said first display, or alternatively further comprising the steps of:
xx. generating a fourth video stream comprising said digitally represented visual instruction in the foreground and said first video stream in the background by said first mobile device, and,
xxi. displaying said fourth video stream on said first display.

7. The method according to claim 5, said first display being optically transparent and said digitally represented visual instruction being displayed on a part of said first display, such that said user may see said digitally represented visual instruction on said part of said first display, and said object of interest optically through said first display, simultaneously.

8. The method according to any of the preceding claims, wherein said first mobile device further comprises
e. a first projection device,
and wherein the method further comprises the step of:
xxii. projecting said digitally represented visual instruction onto said object of interest

9. The method according to any of the preceding claims, said second camera and said second display being provided on opposite sides of said second mobile device, and preferably further comprising the step of:
xxiii. positioning said second mobile device such that said second display is provided on a visual axis between said visual instruction device and an eye of said specialist, or alternatively positioning said second mobile device such that said second camera and said second display are provided on a visual axis between said visual instruction device and the eyes of said specialist.

10. The method according to any of the preceding claims, said generation of said third video stream being performed essentially simultaneously with said capturing of said first video stream and said capturing of said second video stream.

11. The method according to any preceding claim, wherein said second mobile device further comprises:
f. a light source for illuminating said visual instruction device,
and the method further comprises the step of:
xxiv. illuminating said visual instruction device by said light source and/or further comprising the steps of:
xxv. performing a foreground/background segmentation on said second video stream by segmenting each video image of said second video stream into a foreground video image and a background video image such that said digitally represented visual instruction is comprised by said foreground video image, and,
xxvi. performing a background replacement on said second video stream with said first video stream by combining each foreground video image with a temporally corresponding video image from said first video stream.

12. A method of providing a digitally represented visual instruction from a specialist operating a visual instruction device, said visual instruction device preferably comprising the hand of said specialist and/or an object held by said hand, to a user in need of said visual instruction in relation to an object of interest, the method comprising the steps of:
xxvii. providing a first mobile device associated with said user, said first mobile device comprising:
g. a first camera,
xxviii. providing a projection device associated with said user and capable of projecting said digitally represented visual instruction, said projection device preferably being comprised by said first mobile device,
xxix. providing a second mobile device associated with said specialist, said second mobile device comprising:
h. a second camera,
j. a second screen,
xxx. positioning said first mobile device such that said first camera is directed towards a first scene comprising said object of interest,
xxxi. positioning said projection device such that said projection device is capable of projecting said digitally represented visual instruction onto said first scene,
xxxii. positioning said second mobile device such that said second camera is directed towards a second scene comprising said visual instruction device and such that said second screen is viewable by said specialist,
xxxiii. capturing a first video stream of said first scene by said first camera,
xxxiv. capturing a second video stream of said second scene by said second camera, said second video stream comprising a digital representation of said visual instruction device, said digital representation of said visual instruction device defining said digitally represented visual instruction.
xxxv. providing a third video stream using said second video stream, said third video stream comprising said digitally represented visual instruction in the foreground on a dark or black background,
xxxvi. sending said third video stream to said projection device and receiving said third video stream by said projecting device,
xxxvii. projecting said third video stream onto said first scene, thereby providing said digitally represented visual instruction to said user, and thereby introducing said digitally represented visual instruction into said first scene,
xxxviii. sending said first video stream to said second mobile device and receiving said first video stream by said second mobile device,
xxxix. displaying said first video stream on said second screen such that said specialist may view said first video stream, and in response to said first video stream, and in order to generate said digitally represented visual instruction, operate said visual instruction device in relation to said object of interest.

13. The method according to claim 12, further comprising the steps of:
xl. analyzing said second video stream for determining whether:
k. said second video stream comprises said digitally represented visual instruction on a uniform dark or black background, in which case said providing of said third video stream comprises copying said second video stream, or
m. said second video stream does not comprise said digitally represented visual instruction on a uniform dark or black background, in which case said providing of said third video stream comprises the substeps of:
i. performing a foreground/background segmentation on said second video stream by segmenting each video image of said second video stream into a foreground video image and a background video image such that said digitally represented visual instruction is comprised by said foreground video image, and,
ii. performing a background replacement on said second video stream by combining each foreground video image with a dark or black background image.

14. A system for providing a digitally represented visual instruction from a specialist operating a visual instruction device, said visual instruction device preferably comprising the hand of said specialist and/or an object held by said hand to a user in need of said visual instruction in relation to an object of interest, the system comprising:
a first mobile device comprising a first camera,
a second mobile device comprising a second camera and a second display,
said first camera being configured to capture a first video stream of a first scene comprising said object of interest,
said second camera and the second display being provided on the second mobile device such that second camera can be directed towards a second scene comprising said visual instruction device while said second display is viewable by said specialist,
said second camera being further configured to capture a second video stream of said second scene, said second video stream comprising a digital representation of said visual instruction device, said digital representation of said visual instruction device defining said digitally represented visual instruction,
said second mobile being configured to generate a third video stream comprising said digitally represented visual instruction in the foreground and said first video stream in the background, and
said second mobile device being configured to display said third video stream on said second display so that said specialist may view said third video stream, and in response to said third video stream, and in order to generate said digitally represented visual instruction, operate said visual instruction device in relation to said object of interest,
said second mobile device further being configured to provide said digitally represented visual instruction to said first mobile device, and,
said first mobile device being configured to display said digitally represented visual instruction to said user.

15. A system for providing a digitally represented visual instruction from a specialist operating a visual instruction device, said visual instruction device preferably comprising the hand of said specialist and/or an object held by said hand to a user in need of said visual instruction in relation to an object of interest, the system comprising:
a first mobile device comprising a first camera,
a projection device
a second mobile device comprising a second camera and a second display,
said first camera being configured to capture a first video stream of a first scene comprising said object of interest,
said second camera and the second display being provided on the second mobile device such that second camera can be directed towards a second scene comprising said visual instruction device while said second display is viewable by said specialist,
said second camera being further configured to capture a second video stream of said second scene, said second video stream comprising a digital representation of said visual instruction device, said digital representation of said visual instruction device defining said digitally represented visual instruction,
said second mobile being configured to provide a third video stream, using said second video stream, said third video stream comprising said digitally represented visual instruction in the foreground on a dark or black background,
said second mobile device being configured to send said third video stream to said projector,
said projector being configured to receive said third video stream and to project said third video stream onto said object of interest in order to introduce said digitally represented visual instruction into said first scene.
